# EUROPEAN PATENT SPECIFICATION

(11) **EP 0 807 905 B1**
(45) Date of publication and mention of the grant of the patent: **24.07.2002**
(21) Application number: 97113396.2
(22) Date of filing: 08.03.1995
(51) Int. Cl.: G06K 9/00, G07D 7/00

(54) **Method and apparatus for discriminating and counting documents**
Verfahren und Apparat zum Unterscheiden und Zählen von Dokumenten
Procédé et appareil pour identifier et compter des documents

(30) Priority: 08.03.1994 US 207592; 29.03.1994 US 219093; 12.04.1994 US 226660; 16.05.1994 US 243807; 09.08.1994 US 287882; 04.10.1994 US 317349; 14.11.1994 US 340031; 22.12.1994 US 362848; 27.02.1995 US 394752; 07.03.1995 US 399854
(43) Date of publication of application: 19.11.1997
(62) Divisional of application: 95913629.2
(73) Proprietor: CUMMINS-ALLISON CORPORATION, Mount Prospect, Illinois 60056 (US)
(72) Inventor: Graves, Bradford T., Arlington Heights, IL 60004 (US); Mazur, Richard A., Naperville, IL 60540 (US); Mennie, Douglas U., Barrington, IL 60010 (US); Jones, William J., Kenilworth, IL 60043 (US); Raterman, Donald E., Deerfield, IL 60015 (US); Stromme, Lars R., Arlington Heights, IL 60004 (US); Bauch, Aaron M., East Setauket, NY 11733 (US); Csulits, Frank M., Gurnee, IL 60031 (US); Jones, John E., Winnetka, IL 60043 (US); Shreiter, Heinz W., Skokie, IL 60076 (US); Munro, Mark C., Park Ridge, IL 60068 (US)
(74) Representative: Grünecker, Kinkeldey, Stockmair & Schwanhäusser Anwaltssozietät

(56) References cited:
- WO-A-90/07165
- WO-A-92/17394
- US-A- 4 250 806
- US-A- 4 653 647
- US-A- 5 295 196

## Description

The present invention refers to a currency counting and discrimination device for receiving a stack of currency bills, rapidly counting and discriminating the bills in the stack , and then restacking the bills, as set forth in the preamble of claim 1. A device of this kind is known from US-A-5.295.196.

WO 92/17394 discloses a further currency bill counting and discriminating device having a feed arrangement in which cooperating action of an actively-driven drum roller and a corresponding passively-driven picker roller is used for feeding bills stacked in an input bin along a bill transport path. The picker roller is rotationally-driven, not by direct contact with the drum roller, but by contact with a pressure roller which is driven by the drum roller. In effect, the picker roller is rotated in a direction counter to the direction of bill flow so that bills other than the bottom bill in a given stack are effectively pushed away from the direction of bill flow.

US-A-4,250,806 discloses a document processor for transporting documents through a path, detecting flaws thereon by electronically scanning each side of the document, printing selectable indicia only on unflawed documents, and sorting and storing separately the flawed and unflawed documents. The electronically scanned information is compared with a master document stored in a computer memory. As a result of this comparison, outputs are provided from the computer which are indicative of a favorable or unfavorable comparison for controlling the printing and sorting functions. The transport system of he apparatus comprises an impression drum mounted for rotation. A transfer drum mounted for rotation is disposed adjacent to the impression drum. The transfer drum has about a portion of its periphery a number of belts which also encompass idler pulleys. The transfer drum and the belts are substantially contiguous with a portion of the periphery of the impression drum. Adjacent to an inoperative relationship with the feed assembly is a feeder tray which holds a stack of documents which are to be processed, i.e. inspected, printed and sorted. The checks are picked up one-by-one by the feed assembly and placed on the transfer drum, held there by vacuum, and with the aide of the belts transferred to the impression drum.

Machines that are currently available for simultaneous scanning and counting documents such as paper currency are relatively complex and costly, and relatively large in size. The complexity of such machines can also lead to excessive service and maintenance requirements. These drawbacks have inhibited more widespread use of such machines, particularly in banks and other financial institutions where space is limited in areas where the machines are most needed, such as teller areas. The above drawbacks are particularly difficult to overcome in machines which offer much-need features such as the ability to scan bills regardless of their orientation relative to the machine or to each other, and the ability to authenticate genuineness and/or the denomination of the bills.

It is the object of the invention to provide a currency counting and discrimination device which can fit with the requirements as set forth above.

This object is obtained by the features of claim 1. Preferred embodiments of the invention are subject matter of the dependent claims.

The invention is now further explained with reference to the accompanying drawings

### Brief Description Of The Drawings

FIG. 1 is a perspective view of a currency scanning and counting machine embodying the present invention;
FIG. 2a is a functional block diagram of the currency scanning and counting machine of FIG. 1 illustrating a scanhead arranged on each side of a transport path;
FIG. 2b is a functional block diagram of the currency scanning and counting machine illustrating a scanhead arranged on a single side of a transport path;
FIG. 2c is a functional block diagram of the currency scanning and counting machine similar to that of FIG. 2b but illustrating the feeding and scanning of bills along their wide direction;
FIG. 2d is a functional block diagram of the currency scanning and counting machine similar to that of FIGs. 2a-2d illustrating the employment of a second characteristic detector;
FIG. 3 is a diagrammatic perspective illustration of the successive areas scanned during the traversing movement of a single bill across an optical sensor according to a preferred embodiment of the present invention;
FIGs. 4a and 4b are perspective views of a bill and a preferred area to be optically scanned on the bill;
FIGs. 5a and 5b are diagrammatic side elevation views of the scan area to be optically scanned on a bill according to preferred embodiments of the present invention;
FIG. 6a is a perspective view of a bill showing the preferred area of a first surface to be scanned by one of the two scanheads employed in the preferred embodiment of the present invention;
FIG. 6b is another perspective view of the bill in FIG. 6a showing the preferred area of a second surface to be scanned by the other of the scanheads employed in the preferred embodiment of the present invention;
FIG. 6c is a side elevation showing the first surface of a bill scanned by an upper scanhead and the second surface of the bill scanned by a lower scanhead;
FIG. 6d is a side elevation showing the first surface of a bill scanned by a lower scanhead and the second surface of the bill scanned by an upper scanhead;
FIG. 7 is a flow chart illustrating the sequential procedure involved in decelerating and stopping the bill transport system in the event of an error;
FIG. 8a is an enlarged vertical section taken approximately through the center of the machine, but showing the various transport rolls in side elevation;
FIG. 8b is a top plan view of the interior mechanism of the machine of FIG. 1 for transporting bills across the optical scanheads, and also showing the stacking wheels at the front of the machine;
FIG. 9a is an enlarged perspective view of the bill transport mechanism which receives bills from the stripping wheels in the machine of FIG. 1;
FIG. 9b is a cross-sectional view of the bill transport mechanism depicted in FIG. 9a along line 9b;
FIG. 10 is a side elevation of the machine of FIG. 1, with the side panel of the housing removed;
FIG. 11 is an enlarged bottom plan view of the lower support member in the machine of FIG. 1 and the passive transport rolls mounted on that member;
FIG. 12 is a sectional view taken across the center of the bottom support member of FIG. 11 across the narrow dimension thereof;
FIG. 13 is an end elevation of the upper support member which includes the upper scanhead in the machine of FIG. 1, and the sectional view of the lower support member mounted beneath the upper support member;
FIG. 14 is a section taken through the centers of both the upper and lower support members, along the long dimension of the lower support member shown in FIG. 11;
FIG. 15 is a top plan view of the upper support member which includes the upper scanhead;
FIG. 16 is a bottom plan view of the upper support member which includes the upper scanhead;
FIG. 17 is an illustration of the light distribution produced about one of the optical scanheads;
FIGs. 18a and 18b are diagrammatic illustrations of the location of two auxiliary photo sensors relative to a bill passed thereover by the transport and scanning mechanism shown in FIGs. 8a-16;
FIG. 19 is a flow chart illustrating the sequential procedure involved in a ramp-up routine for increasing the transport speed of the bill transport mechanism from zero to top speed;
FIG. 20 is a flow chart illustrating the sequential procedure involved in a ramp-to-slow-speed routine for decreasing the transport speed of the bill transport mechanism from top speed to slow speed;
FIG. 21 is a flow chart illustrating the sequential procedure involved in a ramp-to-zero-speed routine for decreasing the transport speed of the bill transport mechanism to zero;
FIG. 22 is a flow chart illustrating the sequential procedure involved in a pause-after-ramp routine for delaying the feedback loop while the bill transport mechanism changes speeds; and
FIG. 23 is a flow chart illustrating the sequential procedure involved in a feedback loop routine for monitoring and stabilizing the transport speed of the bill transport mechanism.

### Detailed Description Of The Preferred Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the scope of the invention as defined by the appended claims.

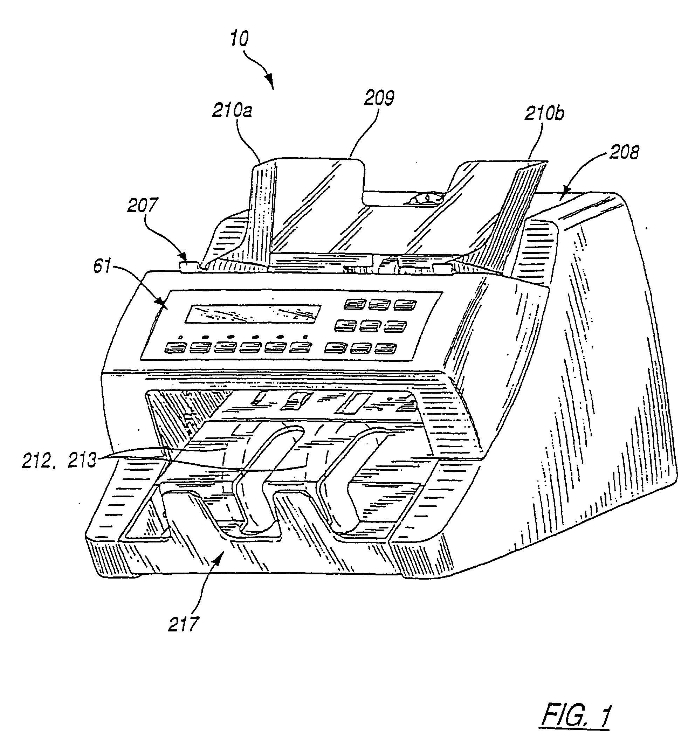

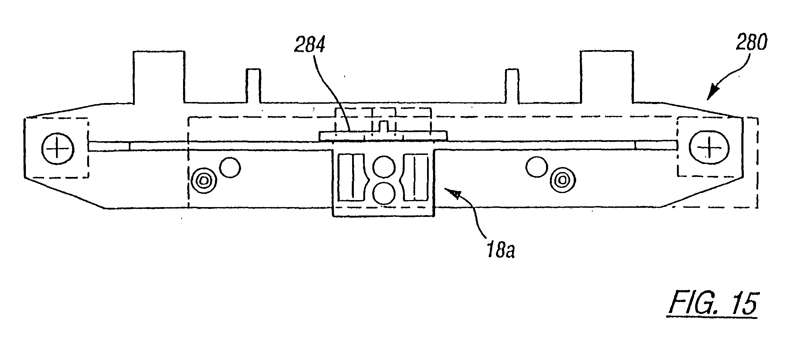

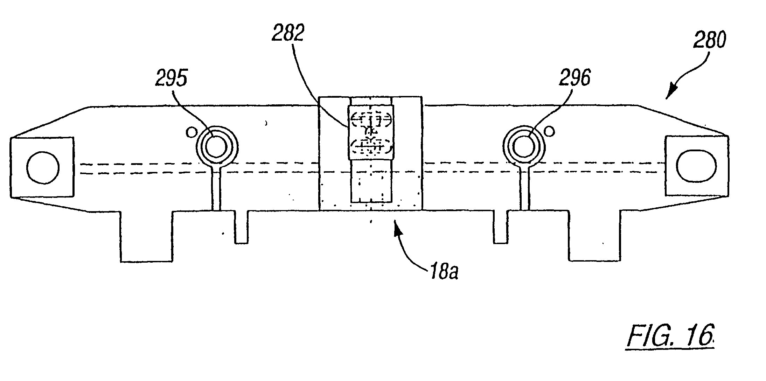

According to a preferred embodiment of the present invention, a currency discrimination system adapted to U.S. currency is described in connection with, for example, FIGs. 1-23. Subsequently, modifications to such a discrimination system will be described in obtaining a currency discrimination system in accordance with other preferred embodiments of the present invention, such a currency discriminator systems having multiple scanheads per side. Furthermore, while the preferred embodiments below entail the scanning of currency bills, the system of the present invention is applicable to other documents as well. For example, the system of the present invention may be employed in conjunction with stock certificates, bonds, and postage and food stamps.

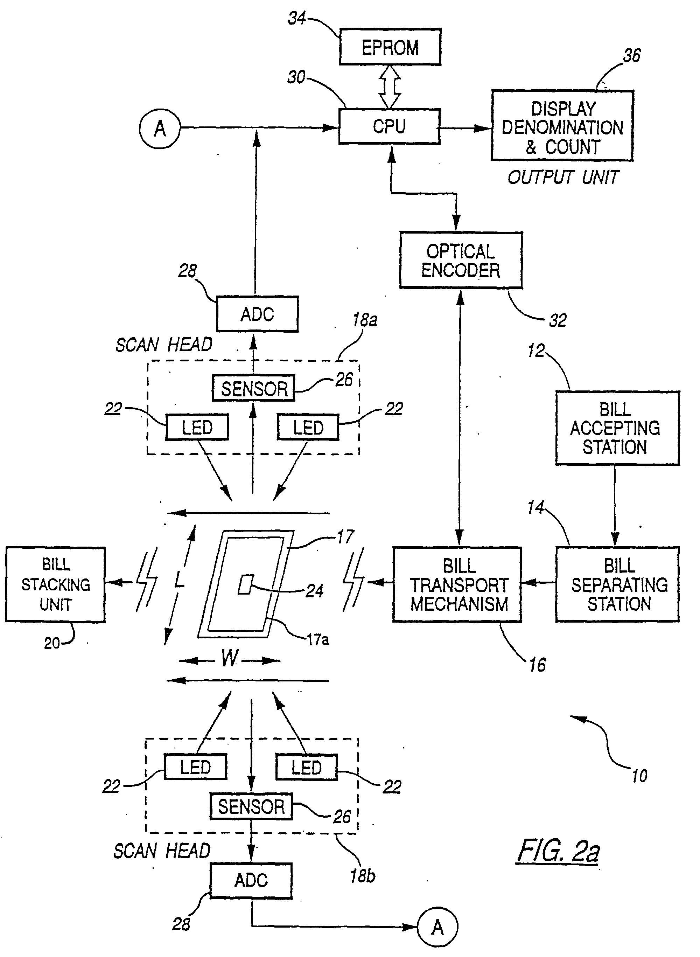

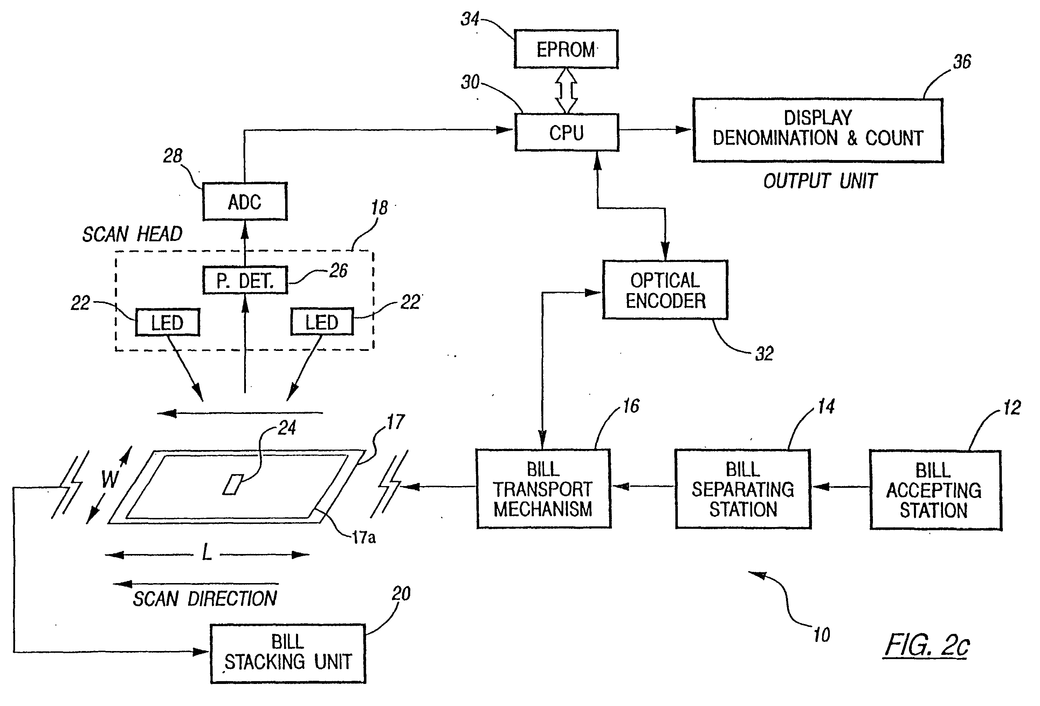

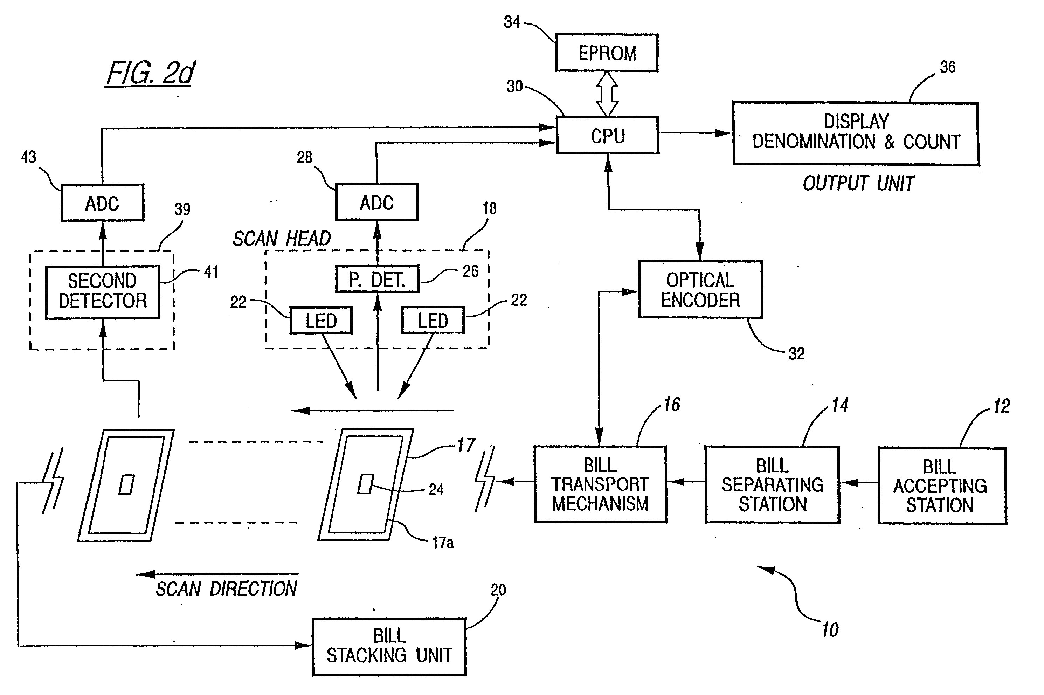

Referring now to FIGs. 1 and 2a, there is shown a preferred embodiment of a currency scanning and counting machine 10 according to the present invention. The machine 10 includes an input receptacle or bill accepting station 12 where stacks of currency bills that need to be identified and counted are positioned. Bills in the input receptacle are acted upon by a bill separating station 14 which functions to pick out or separate one bill at a time for being sequentially relayed by a bill transport mechanism 16 (FIG. 2a), according to a precisely predetermined transport path, between a pair of scanheads 18a, 18b where the currency denomination of the bill is scanned and identified. In the preferred embodiment, bills are scanned and identified at a rate in excess of 800 bills per minute. In the preferred embodiment depicted, each scanhead 18a, 18b is an optical scanhead that scans for characteristic information from a scanned bill 17 which is used to identify the denomination of the bill. The scanned bill 17 is then transported to an output receptacle or bill stacking station 20 where bills so processed are stacked for subsequent removal.

Each optical scanhead 18a, 18b preferably comprises a pair of light sources 22 directing light onto the bill transport path so as to illuminate a substantially rectangular light strip 24 upon a currency bill 17 positioned on the transport path adjacent the scanhead 18. Light reflected off the illuminated strip 24 is sensed by a photodetector 26 positioned between the two light sources. The analog output of the photodetector 26 is converted into a digital signal by means of an analog-to-digital (ADC) convertor unit 28 whose output is fed as a digital input to a central processing unit (CPU) 30.

While scanheads 18a, 18b of FIG. 2a are optical scanheads, it should be understood that it may be designed to detect a variety of characteristic information from currency bills. Additionally, the scanhead may employ a variety of detection means such as magnetic, optical, electrical conductivity, and capacitive sensors. Use of such sensors is discussed in more detail below (see e.g., FIG. 2d).

Referring again to FIG. 2a, the bill transport path is defined in such a way that the transport mechanism 16 moves currency bills with the narrow dimension of the bills being parallel to the transport path and the scan direction. Alternatively, the system 10 may be designed to scan bills along their long dimension or along a skewed dimension. As a bill 17 traverses the scanheads 18a, 18b, the coherent light strip 24 effectively scans the bill across the narrow dimension of the bill. In the preferred embodiment depicted, the transport path is so arranged that a currency bill 17 is scanned across a central section of the bill along its narrow dimension, as shown in FIG. 2a. Each scanhead functions to detect light reflected from the bill as it moves across the illuminated light strip 24 and to provide an analog representation of the variation in reflected light, which, in turn, represents the variation in the dark and light content of the printed pattern or indicia on the surface of the bill. This variation in light reflected from the narrow dimension scanning of the bills serves as a measure for distinguishing, with a high degree of confidence, among a plurality of currency denominations which the system is programmed to handle.

A series of such detected reflectance signals are obtained across the narrow dimension of the bill, or across a selected segment thereof, and the resulting analog signals are digitized under control of the CPU 30 to yield a fixed number of digital reflectance data samples. The data samples are then subjected to a normalizing routine for processing the sampled data for improved correlation and for smoothing out variations due to "contrast" fluctuations in the printed pattern existing on the bill surface. The normalized reflectance data represents a characteristic pattern that is unique for a given bill denomination and provides sufficient distinguishing features among characteristic patterns for different currency denominations.

In order to ensure strict correspondence between reflectance samples obtained by narrow dimension scanning of successive bills, the reflectance sampling process is preferably controlled through the CPU 30 by means of an optical encoder 32 which is linked to the bill transport mechanism 16 and precisely tracks the physical movement of the bill 17 between the scanheads 18a, 18b. More specifically, the optical encoder 32 is linked to the rotary motion of the drive motor which generates the movement imparted to the bill along the transport path. In addition, the mechanics of the feed mechanism ensure that positive contact is maintained between the bill and the transport path, particularly when the bill is being scanned by the scanheads. Under these conditions, the optical encoder 32 is capable of precisely tracking the movement of the bill 17 relative to the light strips 24 generated by the scanheads 18a, 18b by monitoring the rotary motion of the drive motor.

The outputs of the photodetectors 26 are monitored by the CPU 30 to initially detect the presence of the bill adjacent the scanheads and, subsequently, to detect the starting point of the printed pattern on the bill, as represented by the thin borderline 17a which typically encloses the printed indicia on currency bills. Once the borderline 17a has been detected, the optical encoder 32 is used to control the timing and number of reflectance samples that are obtained from the outputs of the photodetectors 26 as the bill 17 moves across the scanheads.

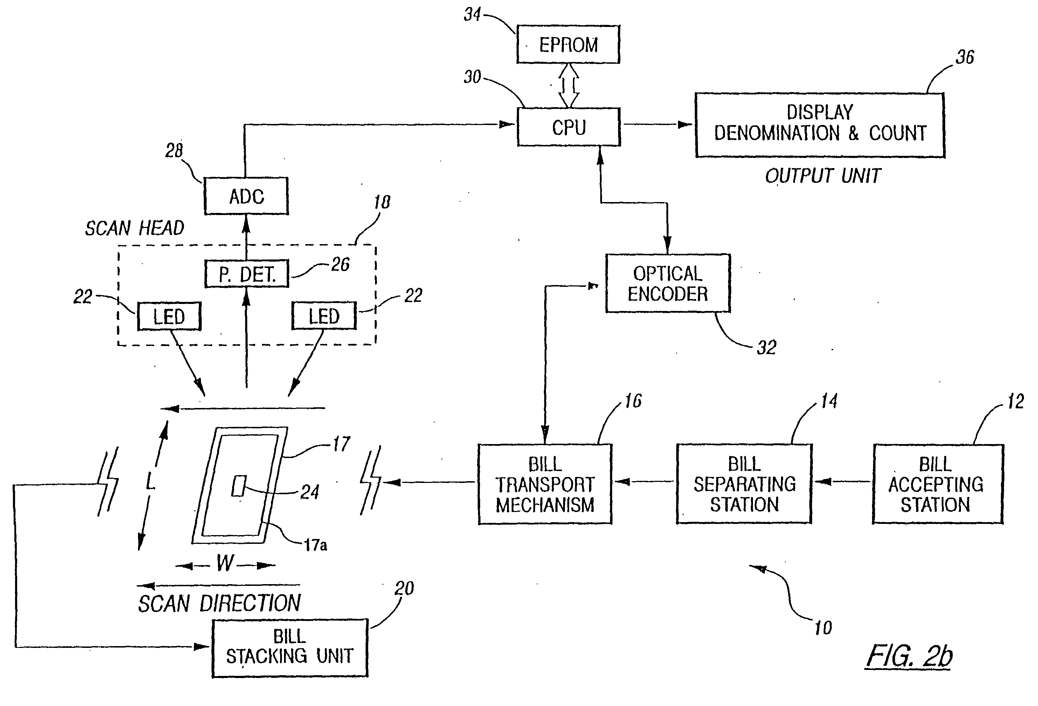

FIG. 2b illustrates a preferred embodiment of a currency scanning and counting machine 10 similar to that of FIG. 2a but having a scanhead on only a single side of the transport path.

FIG. 2c illustrates a preferred embodiment of a currency scanning and counting machine 10 similar to that of FIG. 2b but illustrating feeding and scanning of bills along their wide direction.

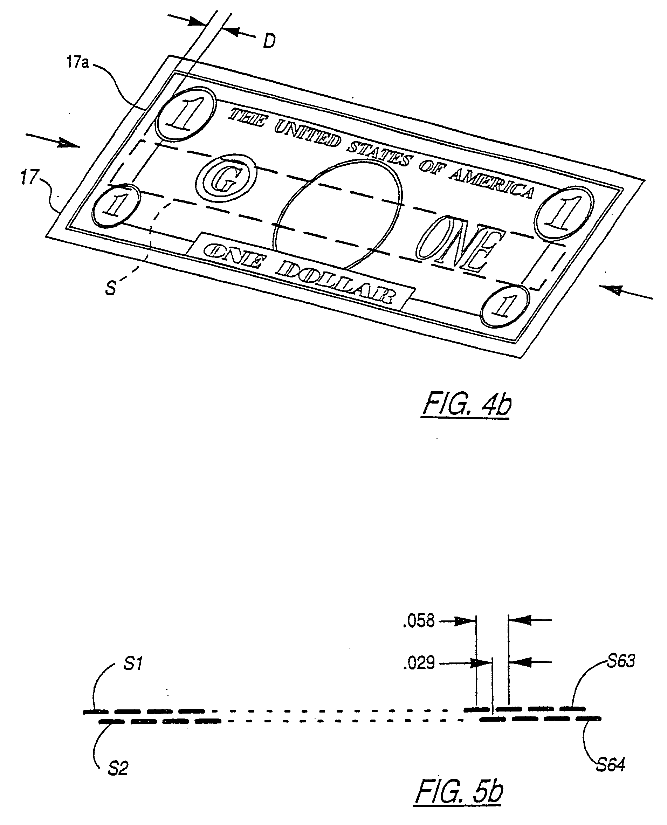

As illustrated in FIGs. 2b-2c, the transport mechanism 16 moves currency bills with a preselected one of their two dimensions (narrow or wide) being parallel to the transport path and the scan direction. FIGs. 2b and 4a illustrate bills oriented with their narrow dimension "W" parallel to the direction of movement and scanning while FIGs. 2c and 4b illustrate bills oriented with their wide dimension "L" parallel to the direction of movement and scanning.

Referring now to FIG. 2d, there is shown a functional block diagram illustrating a preferred embodiment of a currency discriminating and authenticating system according to the present invention. The operation of the system of FIG. 2d is the same as that of FIG. 2a except as modified below. The system 10 includes a bill accepting station 12 where stacks of currency bills that need to be identified, authenticated, and counted are positioned. Accepted bills are acted upon by a bill separating station 14 which functions to pick out or separate one bill at a time for being sequentially relayed by a bill transport mechanism 16, according to a precisely predetermined transport path, across two scanheads 18 and 39 where the currency denomination of the bill is identified and the genuineness of the bill is authenticated. In the preferred embodiment depicted, scanhead 18 is an optical scanhead that scans for a first type of characteristic information from a scanned bill 17 which is used to identify the bill's denomination. A second scanhead 39 scans for a second type of characteristic information from the scanned bill 17. While in the illustrated preferred embodiment scanheads 18 and 39 are separate and distinct, it is understood that these may be incorporated into a single scanhead. For example, where the first characteristic sensed is intensity of reflected light and the second characteristic sensed is color, a single optical scanhead having a plurality of detectors, one or more without filters and one or more with colored filters, may be employed (U.S. Pat. No. 4,992, 860). The scanned bill is then transported to a bill stacking station 20 where bills so processed are stacked for subsequent removal.

The optical scanhead 18 of the preferred embodiment depicted in FIG. 2d comprises at least one light source 22 directing a beam of coherent light downwardly onto the bill transport path so as to illuminate a substantially rectangular light strip 24 upon a currency bill 17 positioned on the transport path below the scanhead 18. Light reflected off the illuminated strip 24 is sensed by a photodetector 26 positioned directly above the strip. The analog output of photodetector 26 is converted into a digital signal by means of an analog-to-digital (ADC) convertor unit 28 whose output is fed as a digital input to a central processing unit (CPU) 30.

The second scanhead 39 comprises at least one detector 41 for sensing a second type of characteristic information from a bill. The analog output of the detector 41 is converted into a digital signal by means of a second analog to digital converter 43 whose output is also fed as a digital input to the central processing unit (CPU) 30.

While scanhead 18 in the preferred embodiment of FIG. 2d is an optical scanhead, it should be understood that the first and second scanheads 18 and 39 may be designed to detect a variety of characteristic information from currency bills. Additionally these scanheads may employ a variety of detection means such as magnetic or optical sensors. For example, a variety of currency characteristics can be measured using magnetic sensing. These include detection of patterns of changes in magnetic flux (U.S. Pat. No. 3,280,974), patterns of vertical grid lines in the portrait area of bills (U.S. Pat. No. 3,870,629), the presence of a security thread (U.S. Pat. No. 5,151,607), total amount of magnetizable material of a bill (U.S. Pat. No. 4,617,458), patterns from sensing the strength of magnetic fields along a bill (U.S. Pat. No. 4,593,184), and other patterns and counts from scanning different portions of the bill such as the area in which the denomination is written out (U.S. Pat. No. 4,356,473).

With regards to optical sensing, a variety of currency characteristics can be measured such as detection of density (U.S. Pat. No. 4,381,447), color (U.S. Pat. Nos. 4,490,846; 3,496,370; 3,480,785), length and thickness (U.S. Pat. No. 4,255,651), the presence of a security thread (U.S. Pat. No. 5,151,607) and holes (U.S. Pat. No. 4,381,447), and other patterns of reflectance and transmission (U.S. Pat. No. 3,496,370; 3,679,314; 3,870,629; 4,179,685). Color detection techniques may employ color filters, colored lamps, and/or dichroic beamsplitters (U.S. Pat. Nos. 4,841,358; 4,658,289; 4,716,456; 4,825,246, 4,992,860 and EP 325,364).

In addition to magnetic and optical sensing, other techniques of detecting characteristic information of currency include electrical conductivity sensing, capacitive sensing (U.S. Pat. No. 5,122,754 [watermark, security thread]; 3,764,899 [thickness]; 3,815,021 [dielectric properties]; 5,151,607 [security thread]), and mechanical sensing (U.S. Pat. No. 4,381,447 [limpness]; 4,255,651 [thickness]).

According to one preferred embodiment, the detection of the borderline 17a constitutes an important step and realizes improved discrimination efficiency in systems designed to accommodate U.S. currency since the borderline 17a serves as an absolute reference point for initiation of sampling. If the edge of a bill were to be used as a reference point, relative displacement of sampling points can occur because of the random manner in which the distance from the edge to the borderline 17a varies from bill to bill due to the relatively large range of tolerances permitted during printing and cutting of currency bills. As a result, it becomes difficult to establish direct correspondence between sample points in successive bill scans and the discrimination efficiency is adversely affected. Accordingly, the modified pattern generation method of the present invention (to be discussed below) is especially important in discrimination systems designed to accommodate bills other than U.S. currency because many non-U.S. bills lack a borderline around the printed indicia on their bills. Likewise, the modified pattern generation method of the present invention is especially important in discrimination systems designed to accommodate bills other than U.S. currency because the printed indicia of many non-U.S. bills lack sharply defined edges which in turns inhibits using the edge of the printed indicia of a bill as a trigger for the initiation of the scanning process and instead promotes reliance on using the edge of the bill itself as the trigger for the initiation of the scanning process.

The use of the optical encoder 32 for controlling the sampling process relative to the physical movement of a bill 17 across the scanheads 18a, 18b is also advantageous in that the encoder 32 can be used to provide a predetermined delay following detection of the borderline 17a prior to initiation of samples. The encoder delay can be adjusted in such a way that the bill 17 is scanned only across those segments which contain the most distinguishable printed indicia relative to the different currency denominations.

In the case of U.S. currency, for instance, it has been determined that the central, approximately two-inch (approximately 5 cm) portion of currency bills, as scanned across the central section of the narrow dimension of the bill, provides sufficient data for distinguishing among the various U.S. currency denominations. Accordingly, the optical encoder can be used to control the scanning process so that reflectance samples are taken for a set period of time and only after a certain period of time has elapsed after the borderline 17a is detected, thereby restricting the scanning to the desired central portion of the narrow dimension of the bill.

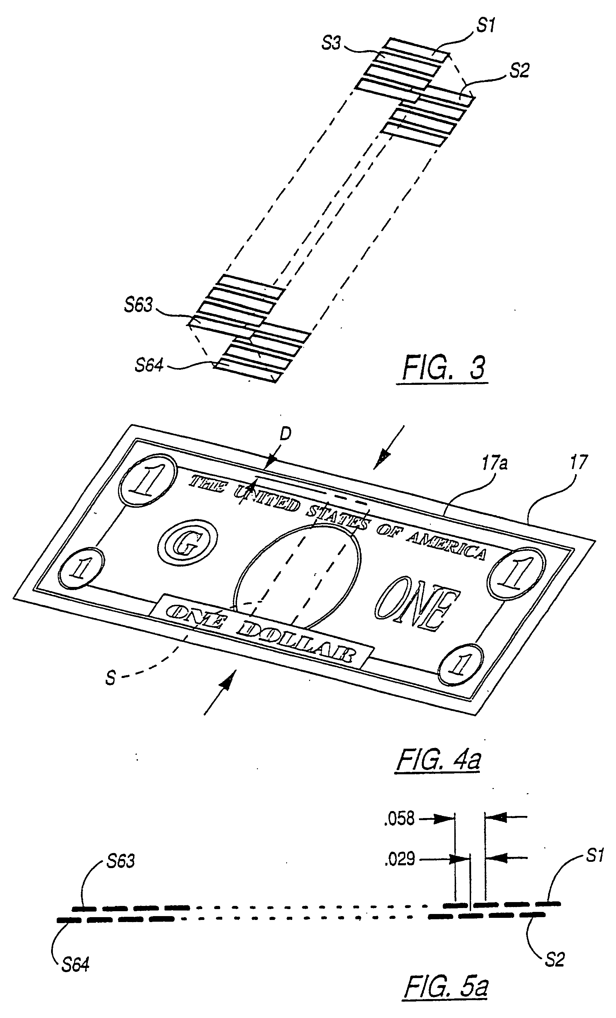

FIGs. 3-5b illustrate the scanning process in more detail. Referring to FIG. 4a, as a bill 17 is advanced in a direction parallel to the narrow edges of the bill, scanning via a slit in the scanhead 18a or 18b is effected along a segment S of the central portion of the bill 17. This segment S begins a fixed distance D inboard of the borderline 17a. As the bill 17 traverses the scanhead, a strip s of the segment S is always illuminated, and the photodetector 26 produces a continuous output signal which is proportional to the intensity of the light reflected from the illuminated strip s at any given instant. This output is sampled at intervals controlled by the encoder, so that the sampling intervals are precisely synchronized with the movement of the bill across the scanhead. FIG. 4b is similar to FIG. 4a but illustrating scanning along the wide dimension of the bill 17.

As illustrated in FIGs. 3, 5a, and 5b, it is preferred that the sampling intervals be selected so that the strips s that are illuminated for successive samples overlap one another. The odd-numbered and even-numbered sample strips have been separated in FIGs. 3, 5a, and 5b to more clearly illustrate this overlap. For example, the first and second strips *s*1 and *s*2 overlap each other, the second and third strips *s*2 and *s*3 overlap each other, and so on. Each adjacent pair of strips overlap each other. In the illustrative example, this is accomplished by sampling strips that are 0.050 inch (0.127 cm) wide at 0.029 inch (0.074 cm) intervals, along a segment S that is 1.83 inch (4.65 cm) long (64 samples).

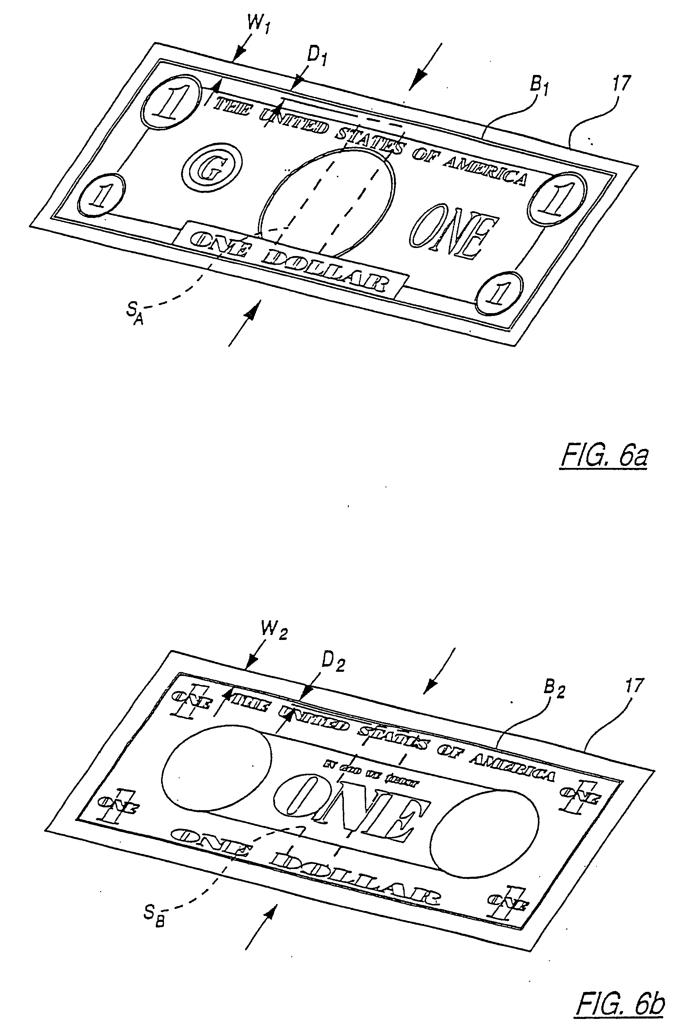

FIGs. 6a and 6b illustrate two opposing surfaces of U.S. bills. The printed pattern on the black and green surfaces of the bill are each enclosed by respective thin borderlines B₁ and B₂. As a bill is advanced in a direction parallel to the narrow edges of the bill, scanning via the wide slit of one of the scanheads is effected along a segment S_{A} of the central portion of the black surface of the bill (FIG. 6a). As previously stated, the orientation of the bill along the transport path determines whether the upper or lower scanhead scans the black surface of the bill. This segment S_{A} begins a fixed distance D₁ inboard of the borderline B₁, which is located a distance W₁ from the edge of the bill. The scanning along segment S_{A} is as describe in connection with FIGs. 3, 4a, and 5a.

Similarly, the other of the two scanheads scans a segment S_{B} of the central portion of the green surface of the bill (FIG. 6b). The orientation of the bill along the transport path determines whether the upper or lower scanhead scans the green surface of the bill. This segment S_{B} begins a fixed distance D₂ inboard of the border line B₂, which is located a distance W₂ from the edge of the bill. For U.S. currency, the distance W₂ on the green surface is greater than the distance W₁ on the black surface. It is this feature of U.S. currency which permits one to determine the orientation of the bill relative to the upper and lower scanheads 18, thereby permitting one to select only the data samples corresponding to the green surface for correlation to the master characteristic patterns in the EPROM 34. The scanning along segment S_{B} is as describe in connection with FIGs. 3, 4a, and 5a.

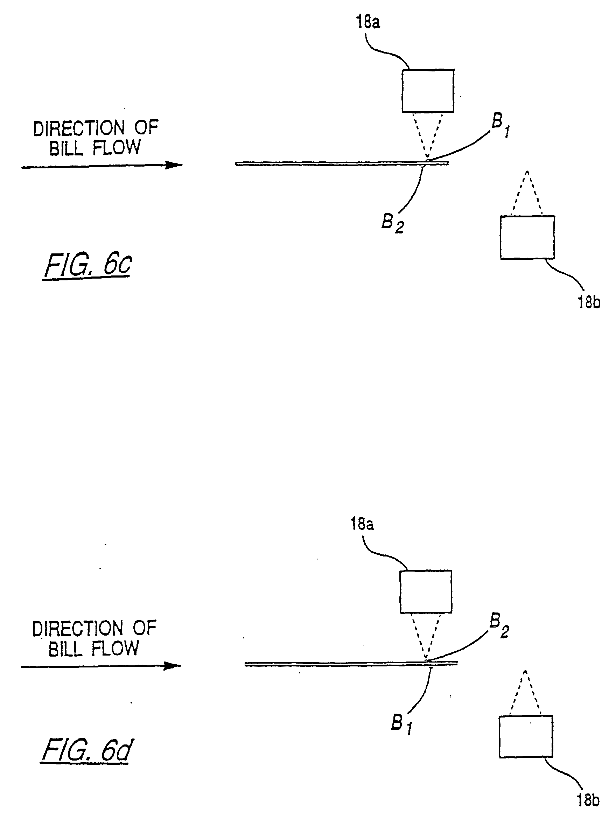

FIGs. 6c and 6d are side elevations of FIG. 2a according to a preferred embodiment of the present invention. FIG. 6c shows the first surface of a bill scanned by an upper scanhead and the second surface of the bill scanned by a lower scanhead while FIG. 6d shows the first surface of a bill scanned by a lower scanhead and the second surface of the bill scanned by an upper scanhead. FIGs. 6c and 6d illustrate the pair of optical scanheads 18a, 18b are disposed on opposite sides of the transport path to permit optical scanning of both opposing surfaces of a bill. With respect to United States currency, these opposing surfaces correspond to the black and green surfaces of a bill. One of the optical scanheads 18 (the "upper" scanhead 18a in FIGs. 6c-6d) is positioned above the transport path and illuminates a light strip upon a first surface of the bill, while the other of the optical scanheads 18 (the "lower" scanhead 18b in FIGs. 6c-6d) is positioned below the transport path and illuminates a light strip upon the second surface of the bill. The surface of the bill scanned by each scanhead 18 is determined by the orientation of the bill relative to the scanheads 18. The upper scanhead 18a is located slightly upstream relative to the lower scanhead 18b.

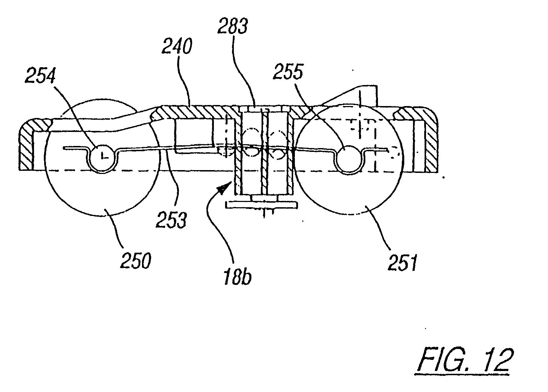

The photodetector of the upper scanhead 18a produces a first analog output corresponding to the first surface of the bill, while the photodetector of the lower scanhead 18b produces a second analog output corresponding to the second surface of the bill. The first and second analog outputs are converted into respective first and second digital outputs by means of respective analog-to-digital (ADC) convertor units 28 whose outputs are fed as digital inputs to a central processing unit (CPU) 30. As described in detail below, the CPU 30 uses the sequence of operations illustrated in FIG. 12 to determine which of the first and second digital outputs corresponds to the green surface of the bill, and then selects the "green" digital output for subsequent correlation to a series of master characteristic patterns stored in EPROM 34. As explained below, the master characteristic patterns are preferably generated by performing scans on the green surfaces, not black surfaces, of bills of different denominations. According to a preferred embodiment, the analog output corresponding to the black surface of the bill is not used for subsequent correlation.

The optical sensing and correlation technique is based upon using the above process to generate a series of stored intensity signal patterns using genuine bills for each denomination of currency that is to be detected. According to a preferred embodiment, two or four sets of master intensity signal samples are generated and stored within the system memory, preferably in the form of an EPROM 34 (see FIG. 2a), for each detectable currency denomination. According to one preferred embodiment these are sets of master green-surface intensity signal samples. In the case of U.S. currency, the sets of master intensity signal samples for each bill are generated from optical scans, performed on the green surface of the bill and taken along both the "forward" and "reverse" directions relative to the pattern printed on the bill. Alternatively, the optical scanning may be performed on the black side of U.S. currency bills or on either surface of foreign bills. Additionally, the optical scanning may be performed on both sides of a bill.

In adapting this technique to U.S. currency, for example, sets of stored intensity signal samples are generated and stored for seven different denominations of U.S. currency, i.e., $1, $2, $5, $10, $20, $50 and $100. For bills which produce significant pattern changes when shifted slightly to the left or right, such as the $2, the $10 and/or the $100 bills in U.S. currency, it is preferred to store two green-side patterns for each of the "forward" and "reverse" directions, each pair of patterns for the same direction represent two scan areas that are slightly displaced from each other along the long dimension of the bill. Accordingly, a set of 16 [or 18] different green-side master characteristic patterns are stored within the EPROM for subsequent correlation purposes (four master patterns for the $10 bill [or four master patterns for the $10 bill and the $2 bill and/or the $100 bill] and two master patterns for each of the other denominations). The generation of the master patterns is discussed in more below. Once the master patterns have been stored, the pattern generated by scanning a bill under test is compared by the CPU 30 with each of the 16 [or 18] master patterns of stored intensity signal samples to generate, for each comparison, a correlation number representing the extent of correlation, i.e., similarity between corresponding ones of the plurality of data samples, for the sets of data being compared.

According to a preferred embodiment, in addition to the above set of 18 original green-side master patterns, five more sets of green-side master patterns are stored in memory.

The CPU 30 is programmed to identify the denomination of the scanned bill as corresponding to the set of stored intensity signal samples for which the correlation number resulting from pattern comparison is found to be the highest. In order to preclude the possibility of mischaracterizing the denomination of a scanned bill, as well as to reduce the possibility of spurious notes being identified as belonging to a valid denomination, a bi-level threshold of correlation is used as the basis for making a "positive" call. If a "positive" call can not be made for a scanned bill, an error signal is generated.

According to a preferred embodiment, master patterns are also stored for selected denominations corresponding to scans along the black side of U.S. bills. More particularly, according to a preferred embodiment, multiple black-side master patterns are stored for $20, $50 and $100 bills. For each of these denominations, three master patterns are stored for scans in the forward and reverse directions for a total of six patterns for each denomination. For a given scan direction, black-side master patterns are generated by scanning a corresponding denominated bill along a segment located about the center of the narrow dimension of the bill, a segment slightly displaced (0.2 inches) to the left of center, and a segment slightly displaced (0.2 inches) to the right of center. When the scanned pattern generated from the green side of a test bill fails to sufficiently correlate with one of the green-side master patterns, the scanned pattern generated from the black side of a test bill is then compared to black-side master patterns.

Using the above sensing and correlation approach, the CPU 30 is programmed to count the number of bills belonging to a particular currency denomination as part of a given set of bills that have been scanned for a given scan batch, and to determine the aggregate total of the currency amount represented by the bills scanned during a scan batch. The CPU 30 is also linked to an output.unit 36 (FIGs. 2a and FIG. 2b) which is adapted to provide a display of the number of bills counted, the breakdown of the bills in terms of currency denomination, and the aggregate total of the currency value represented by counted bills. The output unit 36 can also be adapted to provide a print-out of the displayed information in a desired format.

Referring again to the preferred embodiment depicted in FIG. 2d, as a result of the first comparison described above based on the reflected light intensity information retrieved by scanhead 18, the CPU 30 will have either determined the denomination of the scanned bill 17 or determined that the first scanned signal samples fail to sufficiently correlate with any of the sets of stored intensity signal samples in which case an error is generated. Provided that an error has not been generated as a result of this first comparison based on reflected light intensity characteristics, a second comparison is performed. This second comparison is performed based on a second type of characteristic information, such as alternate reflected light properties, similar reflected light properties at alternate locations of a bill, light transmissivity properties, various magnetic properties of a bill, the presence of a security thread embedded within a bill, the color of a bill, the thickness or other dimension of a bill, etc. The second type of characteristic information is retrieved from a scanned bill by the second scanhead 39. The scanning and processing by scanhead 39 may be controlled in a manner similar to that described above with regard to scanhead 18.

In addition to the sets of stored first characteristic information, in this example stored intensity signal samples, the EPROM 34 stores sets of stored second characteristic information for genuine bills of the different denominations which the system 10 is capable of handling. Based on the denomination indicated by the first comparison, the CPU 30 retrieves the set or sets of stored second characteristic data for a genuine bill of the denomination so indicated and compares the retrieved information with the scanned second characteristic information. If sufficient correlation exists between the retrieved information and the scanned information, the CPU 30 verifies the genuineness of the scanned bill 17. Otherwise, the CPU generates an error. While the preferred embodiment illustrated in FIG. 2d depicts a single CPU 30 for making comparisons of first and second characteristic information and a single EPROM 34 for storing first and second characteristic information, it is understood that two or more CPUs and/or EPROMs could be used, including one CPU for making first characteristic information comparisons and a second CPU for making second characteristic information comparisons. Using the above sensing and correlation approach, the CPU 30 is programmed to count the number of bills belonging to a particular currency denomination whose genuineness has been verified as part of a given set of bills that have been scanned for a given scan batch, and to determine the aggregate total of the currency amount represented by the bills scanned during a scan batch.

One problem encountered in currency recognition and counting systems is the difficulty involved in interrupting (for a variety of reasons) and resuming the scanning and counting procedure as a stack of bills is being scanned. If a particular currency recognition unit (CRU) has to be halted in operation due to a "major" system error, such as a bill being jammed along the transport path, there is generally no concern about the outstanding transitional status of the overall recognition and counting process. However, where the CRU has to be halted due to a "minor" error, such as the identification of a scanned bill as being a counterfeit (based on a variety of monitored parameters) or a "no call" (a bill which is not identifiable as belonging to a specific currency denomination based on the plurality of stored master patterns and/or other criteria), it is desirable that the transitional status of the overall recognition and counting process be retained so that the CRU may be restarted without any effective disruptions of the recognition/counting process.

More specifically, once a scanned bill has been identified as a "no call" bill (B₁) based on some set of predefined criteria, it is desirable that this bill B₁ be transported directly to the system stacker and the CRU brought to a halt with bill B₁ being the last bill deposited in the output receptacle, while at the same time ensuring that the following bills are maintained in positions along the bill transport path whereby CRU operation can be conveniently resumed without any disruption of the recognition/counting process.

Since the bill processing speeds at which currency recognition systems must operate are substantially high (speeds of the order of 800 to 1500 bills per minute), it is practically impossible to totally halt the system following a "no call" without the following bill B₂ already overlapping the optical scanhead and being partially scanned. As a result, it is virtually impossible for the CRU system to retain the transitional status of the recognition/counting process (particularly with respect to bill B₂) in order that the process may be resumed once the bad bill B₁ has been transported to the stacker, conveniently removed therefrom, and the system restarted. The basic problem is that if the CRU is halted with bill B₂ only partially scanned, it is difficult to reference the data reflectance samples extracted therefrom in such a way that the scanning may be later continued (when the CRU is restarted) from exactly the same point where the sample extraction process was interrupted when the CRU was stopped.

Even if an attempt were made at immediately halting the CRU system following a "no call," any subsequent scanning of bills would be totally unreliable because of mechanical backlash effects and the resultant disruption of the optical encoder routine used for bill scanning. Consequently, when the CRU is restarted, the call for the following bill is also likely to be bad and the overall recognition/counting process is totally disrupted as a result of an endless loop of "no calls."

The above problems are solved by the use of a currency detecting and counting technique whereby a scanned bill identified as a "no call" is transported directly to the top of the system stacker and the CRU is halted without adversely affecting the data collection and processing steps for a succeeding bill. Accordingly, when the CRU is restarted, the overall bill recognition and counting procedure can be resumed without any disruption as if the CRU had never been halted at all.

According to a preferred technique, if the bill is identified as a "no call" based on any of a variety of conventionally defined bill criteria, the CRU is subjected to a controlled deceleration process whereby the speed at which bills are moved across the scanhead is reduced from the normal operating speed. During this deceleration process the "no call" bill (B₁) is transported to the top of the stacker and, at the same time, the following bill B₂ is subjected to the standard scanning procedure in order to identify the denomination.

The rate of deceleration is such that optical scanning of bill B₂ is completed by the time the CRU operating speed is reduced to a predefined operating speed. While the exact operating speed at the end of the scanning of bill B₂ is not critical, the objective is to permit complete scanning of bill B₂ without subjecting it to backlash effects that would result if the ramping were too fast, while at the same time ensuring that bill B₁ has in fact been transported to the stacker.

It has been experimentally determined that at nominal operating speeds of the order of 1000 bills per minute, the deceleration is preferably such that the CRU operating speed is reduced to about one-fifth of its normal operating speed at the end of the deceleration phase, i.e., by the time optical scanning of bill B₂ has been completed. It has been determined that at these speed levels, positive calls can be made as to the denomination of bill B₂ based on reflectance samples gathered during the deceleration phase with a relatively high degree of certainty (i.e., with a correlation number exceeding about 850).

Once the optical scanning of bill B₂ has been completed, the speed is reduced to an even slower speed until the bill B₂ has passed bill-edge sensors S1 and S2 described below, and the bill B₂ is then brought to a complete stop. At the same time, the results of the processing of scanned data corresponding to bill B₂ are stored in system memory. The ultimate result of this stopping procedure is that the CRU is brought to a complete halt following the point where the scanning of bill B₂ has been reliably completed, and the scan procedure is not subjected to the disruptive effects (backlash, etc.) which would result if a complete halt were attempted immediately after bill B₁ is identified as a "no call."

The reduced operating speed of the machine at the end of the deceleration phase is such that the CRU can be brought to a total halt before the next following bill B₃ has been transported over the optical scanhead. Thus, when the CRU is in fact halted, bill B₁ is positioned at the top of the system stacker, bill B₂ is maintained in transit between the optical scanhead and the stacker after it has been subjected to scanning, and the following bill B₃ is stopped short of the optical scanhead.

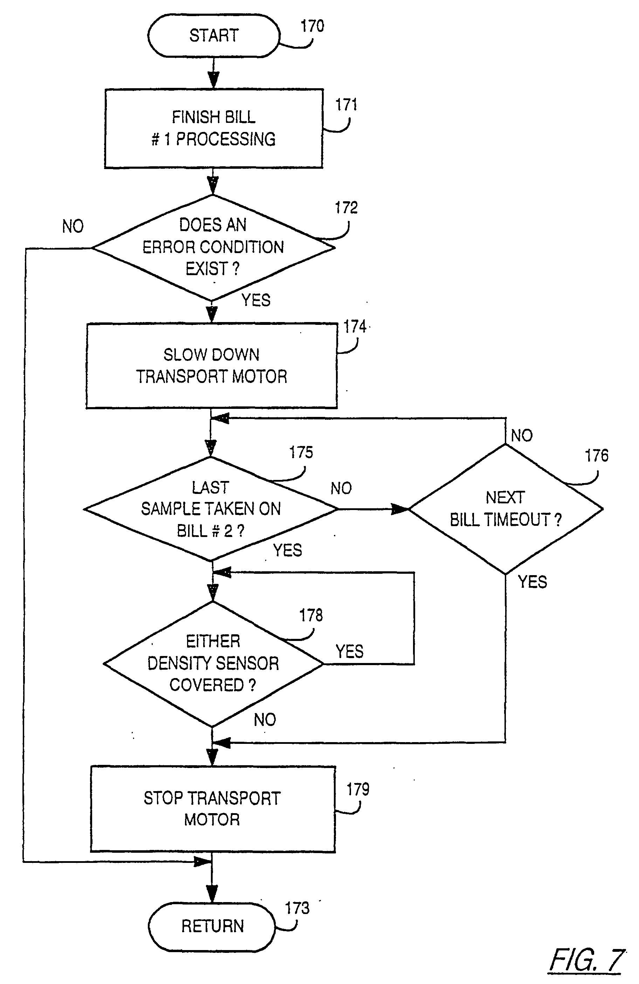

When the CRU is restarted, presumably after corrective action has been taken in response to the "minor" error which led to the CRU being stopped (such as the removal of the "no call" bill from the output receptacle), the overall scanning operation can be resumed in an uninterrupted fashion by using the stored call results for bill B₂ as the basis for updating the system count appropriately, moving bill B₂ from its earlier transitional position along the transport path into the stacker, and moving bill B₃ along the transport path into the optical scanhead area where it can be subjected to normal scanning and processing. A routine for executing the deceleration/stopping procedure described above is illustrated by the flow chart in FIG. 7. This routine is initiated at step 170 with the CRU in its normal operating mode. At step 171, a test bill B₁ is scanned and the data reflectance samples resulting therefrom are processed. Next, at step 172, a determination is made as to whether or not test bill B₁ is a "no call" using predefined criteria in combination with the overall bill recognition procedure. If the answer at step 172 is negative, i.e., the test bill B₁ can be identified, step 173 is accessed where normal bill processing is continued in accordance with the procedures described above. If, however, the test bill B₁ is found to be a "no call" at step 172, step 174 is accessed where CRU deceleration is initiated, e.g., the transport drive motor speed is reduced to about one-fifth its normal speed.

Subsequently, the "no call" bill B₁ is guided to the stacker while, at the same time, the following test bill B₂ is brought under the optical scanhead and subjected to the scanning and processing steps. The call resulting from the scanning and processing of bill B₂ is stored in system memory at this point. Step 175 determines whether the scanning of bill B₂ is complete. When the answer is negative, step 176 determines whether a preselected "bill timeout" period has expired so that the system does not wait for the scanning of a bill that is not present. An affirmative answer at step 176 results in the transport drive motor being stopped at step 179 while a negative answer at step 176 causes steps 175 and 176 to be reiterated until one of them produces an affirmative response.

After the scanning of bill B₂ is complete and before stopping the transport drive motor, step 178 determines whether either of the sensors S1 or S2 (described below) is covered by a bill. A negative answer at step 178 indicates that the bill has cleared both sensors S1 and S2, and thus the transport drive motor is stopped at step 179. This signifies the end of the deceleration/stopping process. At this point in time, bill B₂ remains in transit while the following bill B₃ is stopped on the transport path just short of the optical scanhead.

Following step 179, corrective action responsive to the identification of a "no call" bill is conveniently undertaken; the top-most bill in the stacker is easily removed therefrom and the CRU is then in condition for resuming the scanning process. Accordingly, the CRU can be restarted and the stored results corresponding to bill B₂, are used to appropriately update the system count. Next, the identified bill B₂ is guided along the transport path to the stacker, and the CRU continues with its normal processing routine. While the above deceleration process has been described in a context of a "no call" error, other minor errors (e.g., suspect bills, stranger bills in stranger mode, etc.) are handled in the same manner.

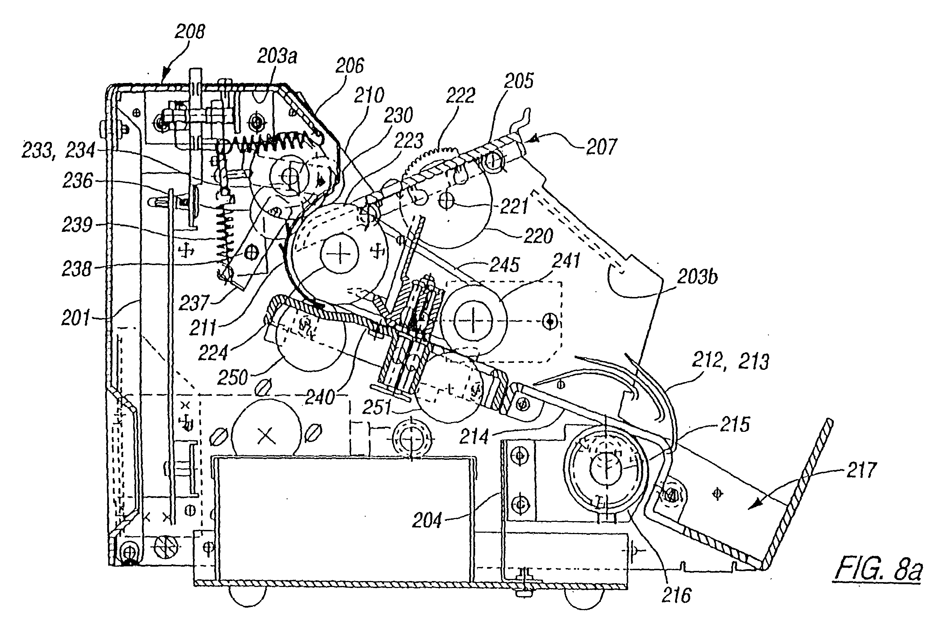

Referring now to FIGs. 8a-10, the mechanical portions of the preferred currency discrimination and counting machine include a rigid frame formed by a pair of side plates 201 and 202, a pair of top plates 203a and 203b, and a lower front plate 204. The input receptacle for receiving a stack of bills to be processed is formed by downwardly sloping and converging walls 205 and 206 formed by a pair of removable covers 207 and 208 which snap onto the frame. The rear wall 206 supports a removable hopper 209 which includes a pair of vertically disposed side walls 210a and 210b which complete the receptacle for the stack of currency bills to be processed.

From the input receptacle, the currency bills are moved in seriatim from the bottom of the stack along a curved guideway 211 which receives bills moving downwardly and rearwardly and changes the direction of travel to a forward direction. The curvature of the guideway 211 corresponds substantially to the curved periphery of the drive roll 223 so as to form a narrow passageway for the bills along the rear side of the drive roll. The exit end of the guideway 211 directs the bills onto a linear path where the bills are scanned and stacked. The bills are transported and stacked with the narrow dimension of the bills maintained parallel to the transport path and the direction of movement at all times.

Stacking of the bills is effected at the forward end of the linear path, where the bills are fed into a pair of driven stacking wheels 212 and 213. These wheels project upwardly through a pair of openings in a stacker plate 214 to receive the bills as they are advanced across the downwardly sloping upper surface of the plate. The stacker wheels 212 and 213 are supported for rotational movement about a shaft 215 journalled on the rigid frame and driven by a motor 216. The flexible blades of the stacker wheels deliver the bills into an output receptacle 217 at the forward end of the stacker plate 214. During operation, a currency bill which is delivered to the stacker plate 214 is picked up by the flexible blades and becomes lodged between a pair of adjacent blades which, in combination, define a curved enclosure which decelerates a bill entering therein and serves as a means for supporting and transferring the bill into the output receptacle 217 as the stacker wheels 212, 213 rotate. The mechanical configuration of the stacker wheels, as well as the manner in which they cooperate with the stacker plate, is conventional and, accordingly, is not described in detail herein.

Returning now to the input region of the machine as shown in FIGs. 8a-10, bills that are stacked on the bottom wall 205 of the input receptacle are stripped, one at a time, from the bottom of the stack. The bills are stripped by a pair of stripping wheels 220 mounted on a drive shaft 221 which, in turn, is supported across the side walls 201, 202. The stripping wheels 220 project through a pair of slots formed in the cover 207. Part of the periphery of each wheel 220 is provided with a raised high-friction, serrated surface 222 which engages the bottom bill of the input stack as the wheels 220 rotate, to initiate feeding movement of the bottom bill from the stack. The serrated surfaces 222 project radially beyond the rest of the wheel peripheries so that the wheels "jog" the bill stack during each revolution so as to agitate and loosen the bottom currency bill within the stack, thereby facilitating the stripping of the bottom bill from the stack.

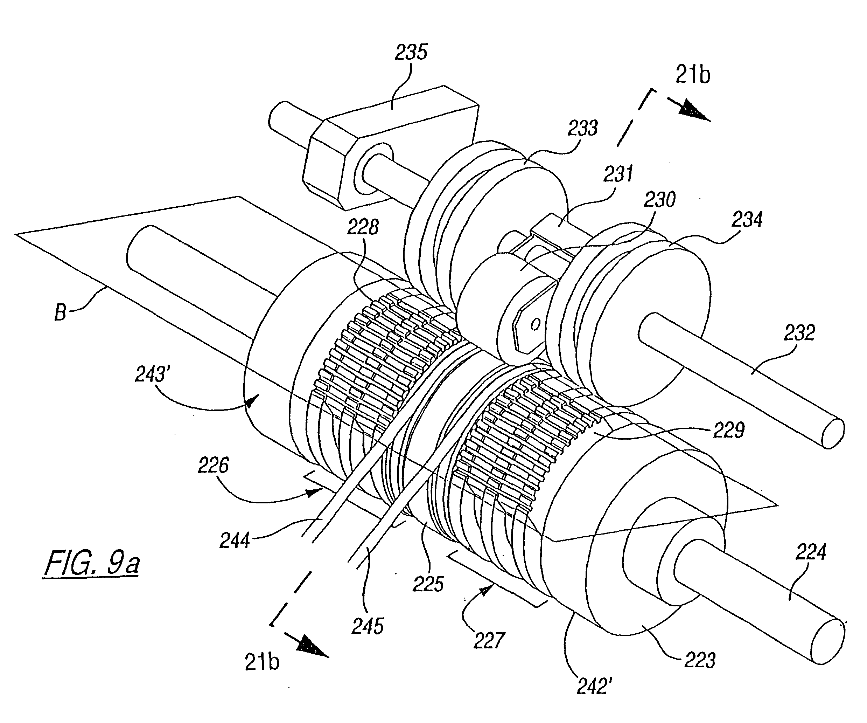

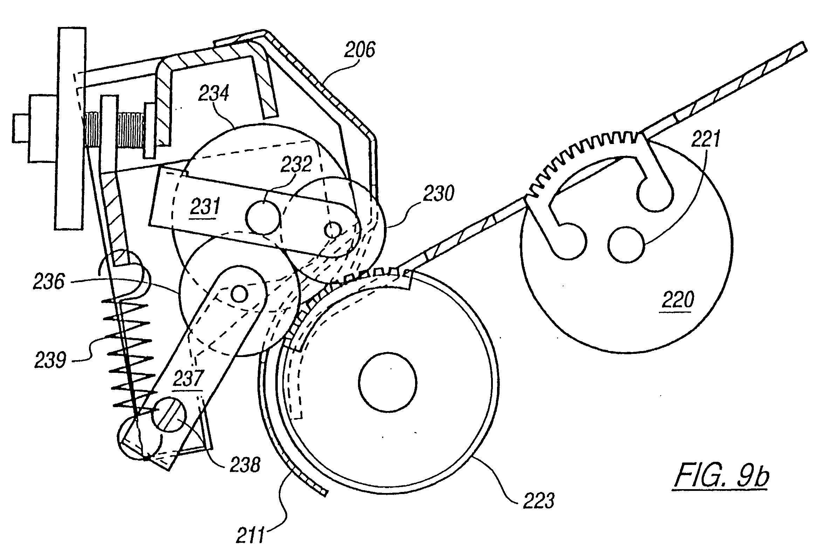

The stripping wheels 220 feed each stripped bill B (FIG. 9a) onto a drive roll 223 mounted on a driven shaft 224 supported across the side walls 201 and 202. As can be seen most clearly in FIGs. 9a and 9b, the drive roll 223 includes a central smooth friction surface 225 formed of a material such as rubber or hard plastic. This smooth friction surface 225 is sandwiched between a pair of grooved surfaces 226 and 227 having serrated portions 228 and 229 formed from a high-friction material.

The serrated surfaces 228, 229 engage each bill after it is fed onto the drive roll 223 by the stripping wheels 220, to frictionally advance the bill into the narrow arcuate passageway formed by the curved guideway 211 adjacent the rear side of the drive roll 223. The rotational movement of the drive roll 223 and the stripping wheels 220 is synchronized so that the serrated surfaces on the drive roll and the stripping wheels maintain a constant relationship to each other. Moreover, the drive roll 223 is dimensioned so that the circumference of the outermost portions of the grooved surfaces is greater than the width *W* of a bill, so that the bills advanced by the drive roll 223 are spaced apart from each other, for the reasons discussed above. That is, each bill fed to the drive roll 223 is advanced by that roll only when the serrated surfaces 228, 229 come into engagement with the bill, so that the circumference of the drive roll 223 determines the spacing between the leading edges of successive bills.

To avoid the simultaneous removal of multiple bills from the stack in the input receptacle, particularly when small stacks of bills are loaded into the machine, the stripping wheels 220 are always stopped with the raised, serrated portions 222 positioned below the bottom wall 205 of the input receptacle. This is accomplished by continuously monitoring the angular position of the serrated portions of the stripping wheels 220 via the encoder 32, and then controlling the stopping time of the drive motor so that the motor always stops the stripping wheels in a position where the serrated portions 222 are located beneath the bottom wall 205 of the input receptacle. Thus, each time a new stack of bills is loaded into the machine, those bills will rest on the smooth portions of the stripping wheels. This has been found to significantly reduce the simultaneous feeding of double or triple bills, particularly when small stacks of bills are involved.

In order to ensure firm engagement between the drive roll 223 and the currency bill being fed, an idler roll 230 urges each incoming bill against the smooth central surface 225 of the drive roll 223. The idler roll 230 is journalled on a pair of arms 231 which are pivotally mounted on a support shaft 232. Also mounted on the shaft 232, on opposite sides of the idler roll 230, are a pair of grooved guide wheels 233 and 234. The grooves in these two wheels 233, 234 are registered with the central ribs in the two grooved surfaces 226, 227 of the drive roll 223. The wheels 233, 234 are locked to the shaft 232, which in turn is locked against movement in the direction of the bill movement (clockwise as view in FIG. 8a) by a one-way spring clutch 235. Each time a bill is fed into the nip between the guide wheels 233, 234 and the drive roll 223, the clutch 235 is energized to turn the shaft 232 just a few degrees in a direction opposite the direction of bill movement. These repeated incremental movements distribute the wear uniformly around the circumferences of the guide wheels 233, 234. Although the idler roll 230 and the guide wheels 233, 234 are mounted behind the guideway 211, the guideway is apertured to allow the roll 230 and the wheels 233, 234 to engage the bills on the front side of the guideway.

Beneath the idler roll 230, a spring-loaded pressure roll 236 (FIGs. 8a and 9b) presses the bills into firm engagement with the smooth friction surface 225 of the drive roll as the bills curve downwardly along the guideway 211. This pressure roll 236 is journalled on a pair of arms 237 pivoted on a stationary shaft 238. A spring 239 attached to the lower ends of the arms 237 urges the roll 236 against the drive roll 233, through an aperture in the curved guideway 211.

At the lower end of the curved guideway 211, the bill being transported by the drive roll 223 engages a flat guide plate 240 which carries a lower scan head 18. Currency bills are positively driven along the flat plate 240 by means of a transport roll arrangement which includes the drive roll 223 at one end of the plate and a smaller driven roll 241 at the other end of the plate. Both the driver roll 223 and the smaller roll 241 include pairs of smooth raised cylindrical surfaces 242 and 243 which hold the bill flat against the plate 240. A pair of O rings 244 and 245 fit into grooves formed in both the roll 241 and the roll 223 to engage the bill continuously between the two rolls 223 and 241 to transport the bill while helping to hold the bill flat against the guide plate 240.

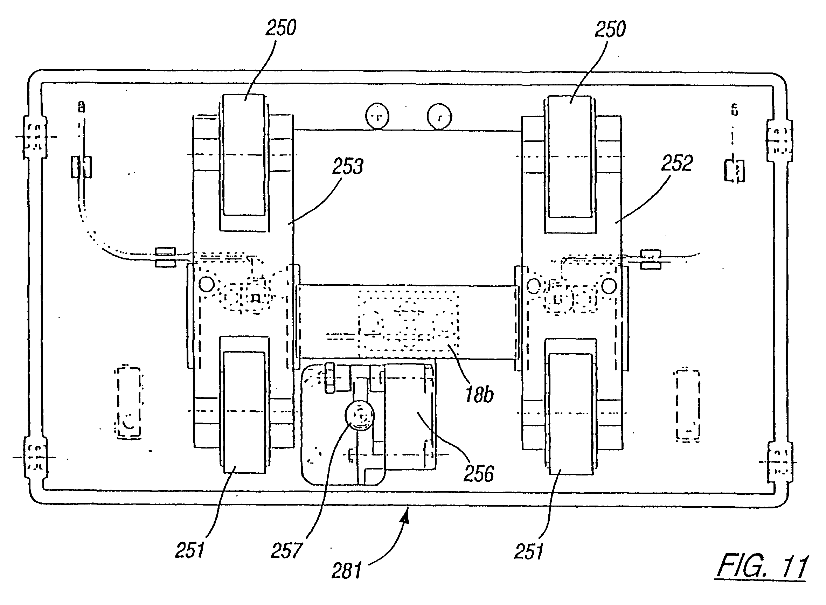

The flat guide plate 240 is provided with openings through which the raised surfaces 242 and 243 of both the drive roll 223 and the smaller driven roll 241 are subjected to counter-rotating contact with corresponding pairs of passive transport rolls 250 and 251 having high-friction rubber surfaces. The passive rolls 250, 251 are mounted on the underside of the flat plate 240 in such a manner as to be freewheeling about their axes 254 and 255 and biased into counter-rotating contact with the corresponding upper rolls 223 and 241. The passive rolls 250 and 251 are biased into contact with the driven rolls 223 and 241 by means of a pair of H-shaped leaf springs 252 and 253 (see FIGs. 11 and 12). Each of the four rolls 250, 251 is cradled between a pair of parallel arms of one of the H-shaped leaf springs 252 and 253. The central portion of each leaf spring is fastened to the plate 240, which is fastened rigidly to the machine frame, so that the relatively stiff arms of the H-shaped springs exert a constant biasing pressure against the rolls and push them against the upper rolls 223 and 241.

The points of contact between the driven and passive transport rolls are preferably coplanar with the flat upper surface of the plate 240 so that currency bills can be positively driven along the top surface of the plate in a flat manner. The distance between the axes of the two driven transport rolls, and the corresponding counter-rotating passive rolls, is selected to be just short of the length of the narrow dimension of the currency bills. Accordingly, the bills are firmly gripped under uniform pressure between the upper and lower transport rolls within the scanhead area, thereby minimizing the possibility of bill skew and enhancing the reliability of the overall scanning and recognition process.

The positive guiding arrangement described above is advantageous in that uniform guiding pressure is maintained on the bills as they are transported through the optical scanhead area, and twisting or skewing of the bills is substantially reduced. This positive action is supplemented by the use of the H-springs 252, 253 for uniformly biasing the passive rollers into contact with the active rollers so that bill twisting or skew resulting from differential pressure applied to the bills along the transport path is avoided. The O-rings 244, 245 function as simple, yet extremely effective means for ensuring that the central portions of the bills are held flat.

The location of a magnetic head 256 and a magnetic head adjustment screw 257 are illustrated in FIG. 11. The adjustment screw 257 adjusts the proximity of the magnetic head 256 relative to a passing bill and thereby adjusts the strength of the magnetic field in the vicinity of the bill.

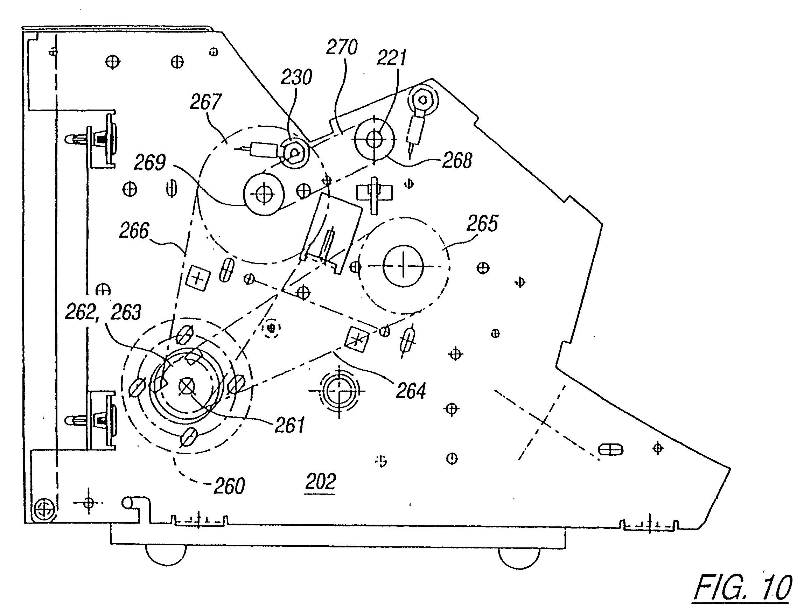

FIG. 10 shows the mechanical arrangement for driving the various means for transporting currency bills through the machine. A motor 260 drives a shaft 261 carrying a pair of pulleys 262 and 263. The pulley 262 drives the roll 241 through a belt 264 and pulley 265, and the pulley 263 drives the roll 223 through a belt 266 and pulley 267. Both pulleys 265 and 267 are larger than pulleys 262 and 263 in order to achieve the desired speed reduction from the typically high speed at which the motor 260 operates.

The shaft 221 of the stripping wheels 220 is driven by means of a pulley 268 provided thereon and linked to a corresponding pulley 269 on the shaft 224 through a belt 270. The pulleys 268 and 269 are of the same diameter so that the shafts 221 and 224 rotate in unison.

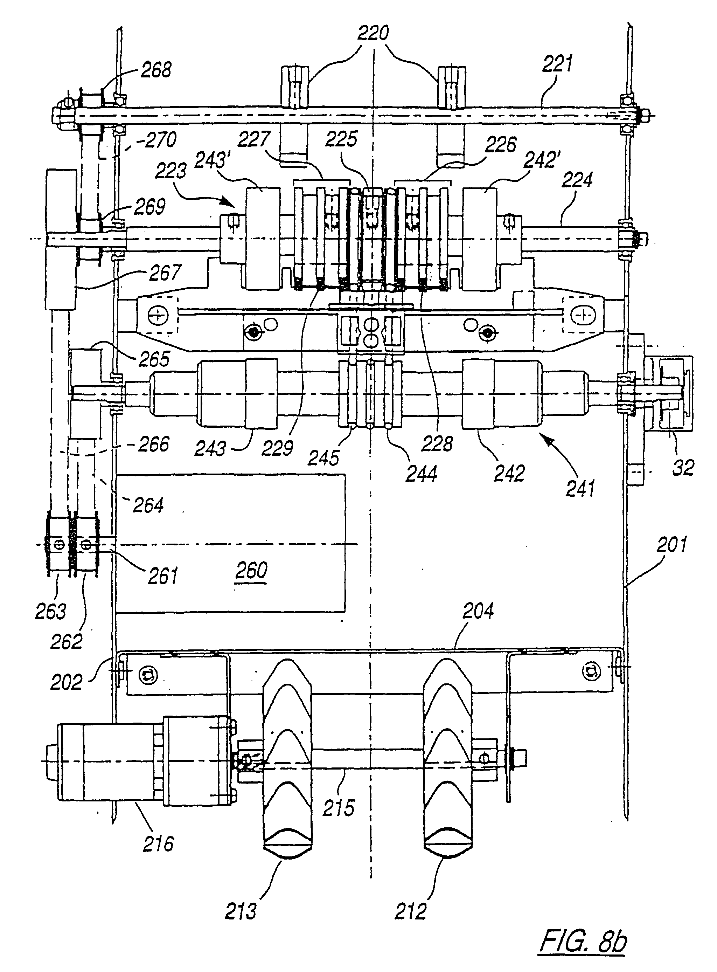

As shown in FIG. 8b, the optical encoder 32 is mounted on the shaft of the roller 241 for precisely tracking the position of each bill as it is transported through the machine, as discussed in detail above in connection with the optical sensing and correlation technique.

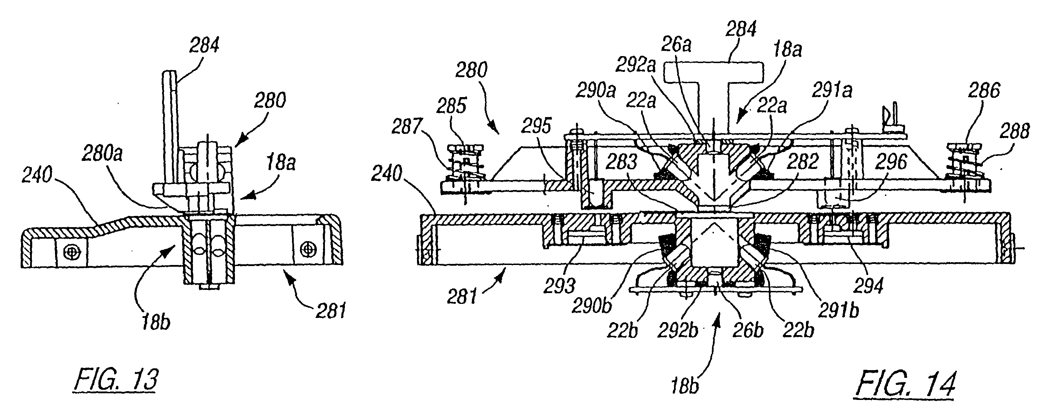

The upper and lower scanhead assemblies are shown most clearly in FIGs. 13-16. It can be seen that the housing for each scanhead is formed as an integral part of a unitary molded plastic support member 280 or 281 that also forms the housings for the light sources and photodetectors of the photosensors PS1 and PS2. The lower member 281 also forms the flat guide plate 240 that receives the bills from the drive roll 223 and supports the bills as they are driven past the scanheads 18a and 18b.

The two support members 280 and 281 are mounted facing each other so that the lenses 282 and 283 of the two scanheads 18a, 18b define a narrow gap through which each bill is transported. Similar, but slightly larger, gaps are formed by the opposed lenses of the light sources and photodetectors of the photosensors PS1 and PS2. The upper support member 280 includes a tapered entry guide 280a which guides an incoming bill into the gaps between the various pairs of opposed lenses.

The lower support member 281 is attached rigidly to the machine frame. The upper support member 280, however, is mounted for limited vertical movement when it is lifted manually by a handle 284, to facilitate the clearing of any paper jams that occur beneath the member 280. To allow for such vertical movement, the member 280 is slidably mounted on a pair of posts 285 and 286 on the machine frame, with a pair of springs 287 and 288 biasing the member 280 to its lowermost position.

Each of the two optical scanheads 18a and 18b housed in the support members 280, 281 includes a pair of light sources acting in combination to uniformly illuminate light strips of the desired dimension on opposite sides of a bill as it is transported across the plate 240. Thus, the upper scanhead 18a includes a pair of LEDs 22a, directing light downwardly through an optical mask on top of the lens 282 onto a bill traversing the flat guide plate 240 beneath the scanhead. The LEDs 22a are angularly disposed relative to the vertical axis of the scanhead so that their respective light beams combine to illuminate the desired light strip defined by an aperture in the mask. The scanhead 18a also includes a photodetector 26a mounted directly over the center of the illuminated strip for sensing the light reflected off the strip. The photodetector 26a is linked to the CPU 30 through the ADC 28 for processing the sensed data as described above.

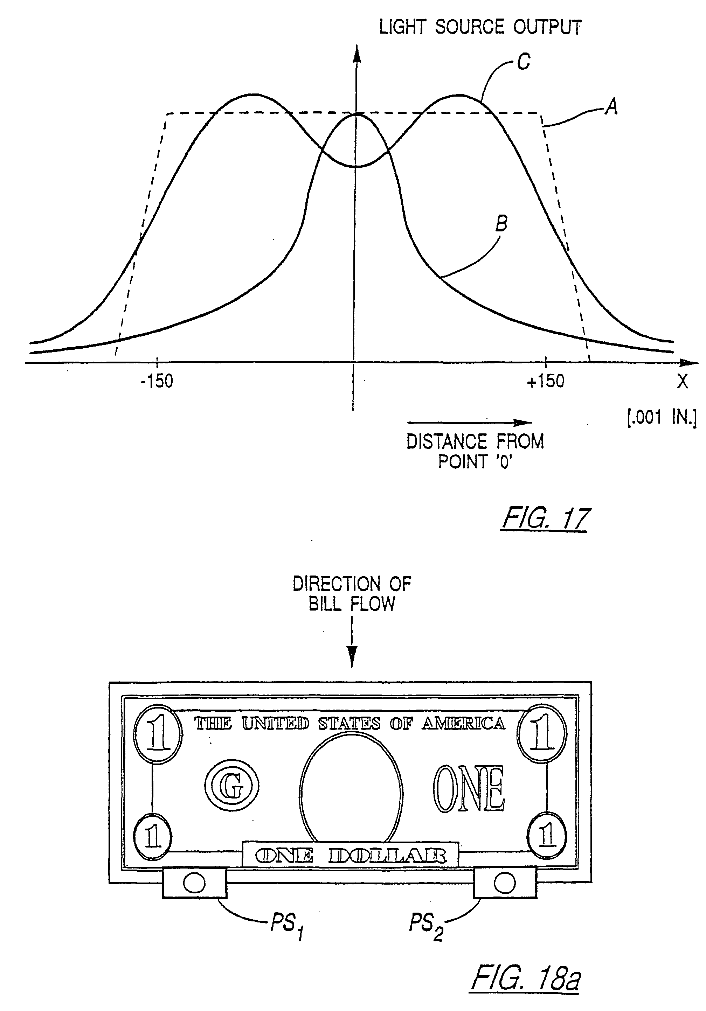

When the photodetector 26a is positioned on an axis passing through the center of the illuminated strip, the illumination by the LED's as a function of the distance from the central point "0" along the X axis, should optimally approximate a step function as illustrated by the curve A in FIG. 17. With the use of a single light source angularly displaced relative to a vertical axis through the center of the illuminated strip, the variation in illumination by an LED typically approximates a Gaussian function, as illustrated by the curve B in FIG. 17.

The two LEDs 22a are angularly disposed relative to the vertical axis by angles α and β, respectively. The angles α and β are selected to be such that the resultant strip illumination by the LED's is as close as possible to the optimum distribution curve A in FIG. 17. The LED illumination distribution realized by this arrangement is illustrated by the curve designated as "C" in FIG. 17 which effectively merges the individual Gaussian distributions of each light source to yield a composite distribution which sufficiently approximates the optimum curve A.

In the particular embodiment of the scanheads 18a and 18b illustrated in the drawings, each scanhead includes two pairs of LEDs and two photodetectors for illuminating, and detecting light reflected from, strips of two different sizes. Thus, each mask also includes two slits which are formed to allow light from the LEDs to pass through and illuminate light strips of the desired dimensions. More specifically, one slit illuminates a relatively wide strip used for obtaining the reflectance samples which correspond to the characteristic pattern for a test bill. In a preferred embodiment, the wide slit has a length of about 0.500" and a width of about 0.050". The second slit forms a relatively narrow illuminated strip used for detecting the thin borderline surrounding the printed indicia on currency bills, as described above in detail. In a preferred embodiment, the narrow slit 283 has a length of about 0.300" and a width of about 0.010".

In order to prevent dust from fouling the operation of the scanheads, each scanhead includes three resilient seals or gaskets 290, 291, and 292. The two side seals 290 and 291 seal the outer ends of the LEDs 22, while the center seal 292 seals the outer end of the photodetector 26. Thus, dust cannot collect on either the light sources or the photodetectors, and cannot accumulate and block the slits through which light is transmitted from the sources to the bill, and from the bill to the photodetectors.

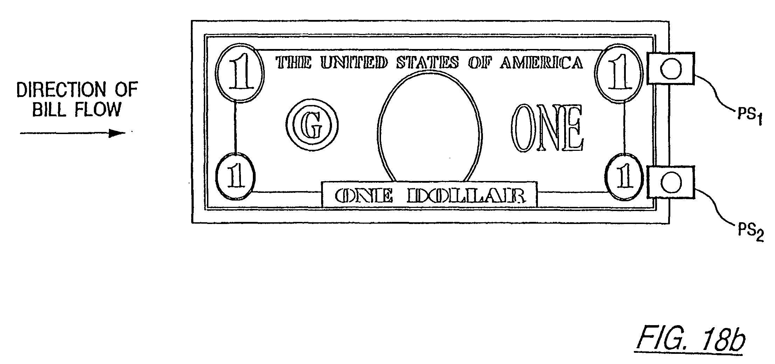

Doubling or overlapping of bills in the illustrative transport system is detected by two photosensors PS1 and PS2 which are located on a common transverse axis that is perpendicular to the direction of bill flow (see e.g., FIGs. 18a and 18b). The photosensors PS1 and PS2 include photodetectors 293 and 294 mounted within the lower support member 281 in immediate opposition to corresponding light sources 295 and 296 mounted in the upper support member 280. The photodetectors 293, 294 detect beams of light directed downwardly onto the bill transport path from the light sources 295, 296 and generate analog outputs which correspond to the sensed light passing through the bill. Each such output is converted into a digital signal by a conventional ADC convertor unit (not shown) whose output is fed as a digital input to and processed by the system CPU.

The presence of a bill adjacent the photosensors PS1 and PS2 causes a change in the intensity of the detected light, and the corresponding changes in the analog outputs of the photodetectors 293 and 294 serve as a convenient means for density-based measurements for detecting the presence of "doubles" (two or more overlaid or overlapped bills) during the currency scanning process. For instance, the photosensors may be used to collect a predefined number of density measurements on a test bill, and the average density value for a bill may be compared to predetermined density thresholds (based, for instance, on standardized density readings for master bills) to determine the presence of overlaid bills or doubles.

In order to prevent the accumulation of dirt on the light sources 295 and 296 and/or the photodetectors 293, 294 of the photosensors PS1 and PS2, both the light sources and the photodetectors are enclosed by lenses mounted so close to the bill path that they are continually wiped by the bills. This provides a self-cleaning action which reduces maintenance problems and improves the reliability of the outputs from the photosensors over long periods of operation.

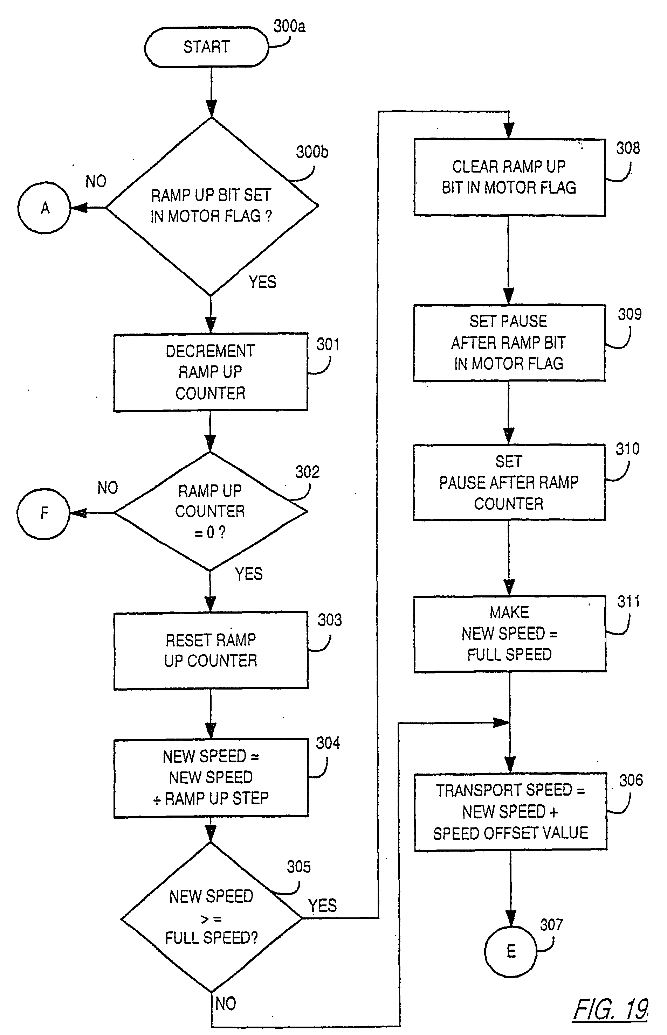

The CPU 30, under control of software stored in the EPROM 34, monitors and controls the speed at which the bill transport mechanism 16 transports bills from the bill separating station 14 to the bill stacking unit. Flowcharts of the speed control routines stored in the EPROM 34 are depicted in FIGs. 19-23. To execute more than the first step in any given routine, the currency discriminating system 10 must be operating in a mode requiring the execution of the routine.

Referring first to FIG. 19, when a user places a stack of bills in the bill accepting station 12 for counting, the transport speed of the bill transport mechanism 16 must accelerate or "ramp up" from zero to top speed. Therefore, in response to receiving the stack of bills in the bill accepting station 12, the CPU 30 sets a ramp-up bit in a motor flag stored in the memory unit 38. Setting the ramp-up bit causes the CPU 30 to proceed beyond step 300b of the ramp-up routine. If the ramp-up bit is set, the CPU 30 utilizes a ramp-up counter and a fixed parameter "ramp-up step" to incrementally increase the transport speed of the bill transport mechanism 16 until the bill transport mechanism 16 reaches its top speed. The "ramp-up step" is equal to the incremental increase in the transport speed of the bill transport mechanism 16, and the ramp-up counter determines the amount of time between incremental increases in the bill transport speed. The greater the value of the "ramp-up step", the greater the increase in the transport speed of the bill transport mechanism 16 at each increment. The greater the maximum value of the ramp-up counter, the greater the amount of time between increments. Thus, the greater the value of the "ramp-up step" and the lesser the maximum value of the ramp-up counter, the lesser the time it takes the bill transport mechanism 16 to reach its top speed.

The ramp-up routine in FIG. 19 employs a variable parameter "new speed", a fixed parameter "full speed", and the variable parameter "transport speed". The "full speed" represents the top speed of the bill transport mechanism 16, while the "new speed" and "transport speed" represent the desired current speed of the bill transport mechanism 16. To account for operating offsets of the bill transport mechanism 16, the "transport speed" of the bill transport mechanism 16 actually differs from the "new speed" by a "speed offset value". Outputting the "transport speed" to the bill transport mechanism 16 causes the bill transport mechanism 16 to operate at the transport speed.

To incrementally increase the speed of the bill transport mechanism 16, the CPU 30 first decrements the ramp-up counter from its maximum value (step 301). If the maximum value of the ramp-up counter is greater than one at step 302, the CPU 30 exits the speed control software in FIGs. 19-23 and repeats steps 300b, 301, and 302 during subsequent iterations of the ramp-up routine until the ramp-up counter is equal to zero. When the ramp-up counter is equal to zero, the CPU 30 resets the ramp-up counter to its maximum value (step 303). Next, the CPU 30 increases the "new speed" by the "ramp-up step" (step 304). If the "new speed" is not yet equal to the "full speed" at step 305, the "transport speed" is set equal to the "new speed" plus the "speed offset value" (step 306). The "transport speed" is output to the bill transport mechanism 16 at step 307 of the routine in FIG. 19 to change the speed of the bill transport mechanism 16 to the "transport speed". During subsequent iterations of the ramp-up routine, the CPU 30 repeats steps 300b-306 until the "new speed" is greater than or equal to the "full speed".

Once the "new speed" is greater than or equal to the "full speed" at step 305, the ramp-up bit in the motor flag is cleared (step 308), a pause-after-ramp bit in the motor flag is set (step 309), a pause-after-ramp counter is set to its maximum value (step 310), and the parameter "new speed" is set equal to the "full speed" (step 311). Finally, the "transport speed" is set equal to the "new speed" plus the "speed offset value" (step 306). Since the "new speed" is equal to the "full speed", outputting the "transport speed" to the bill transport mechanism 16 causes the bill transport mechanism 16 to operate at its top speed. The ramp-up routine in FIG. 19 smoothly increases the speed of the bill transport mechanism without causing jerking or motor spikes. Motor spikes could cause false triggering of the optical scanhead 18 such that the scanhead 18 scans non-existent bills.

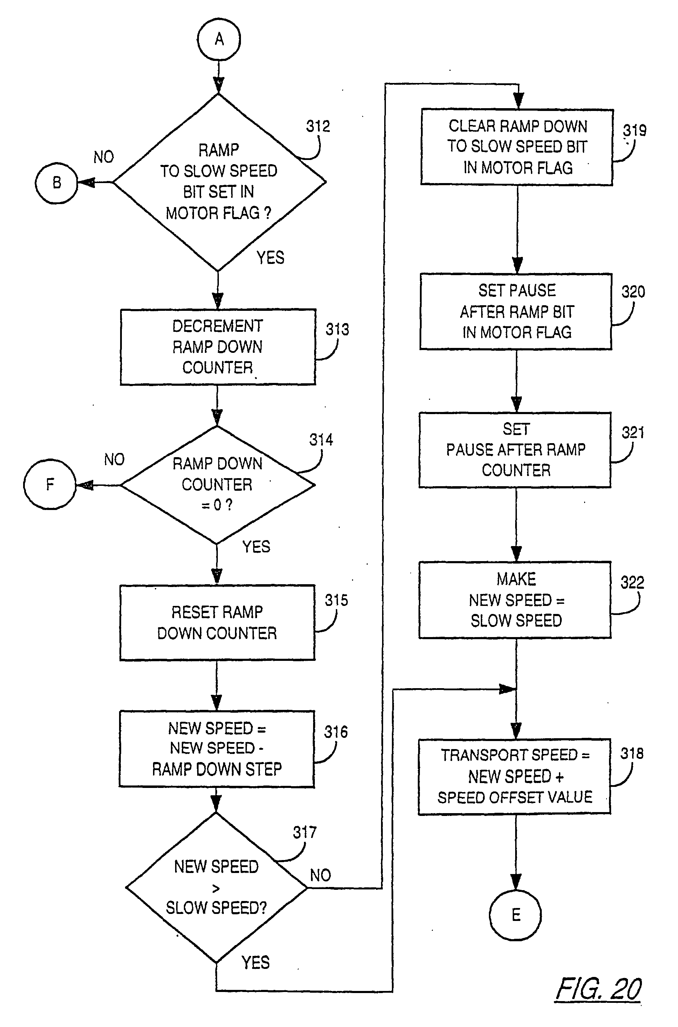

During normal counting, the bill transport mechanism 16 transports bills from the bill separating station 14 to the bill stacking unit at its top speed. In response to the optical scanhead 18 detecting a stranger, suspect or no call bill, however, the CPU 30 sets a ramp-to-slow-speed bit in the motor flag. Setting the ramp-to-slow-speed bit causes the CPU 30 to proceed beyond step 312 of the ramp-to-slow-speed routine in FIG. 20 on the next iteration of the software in FIGs. 19-23. Using the ramp-to-slow-speed routine in FIG. 20, the CPU 30 causes the bill transport mechanism 16 to controllably decelerate or "ramp down" from its top speed to a slow speed. As the ramp-to-slow speed routine in FIG. 20 is similar to the ramp-up routine in FIG. 19, it is not described in detail herein.

It suffices to state that if the ramp-to-slow-speed bit is set in the motor flag, the CPU 30 decrements a ramp-down counter (step 313) and determines whether or not the ramp-down counter is equal to zero (step 314). If the ramp-down counter is not equal to zero, the CPU 30 exits the speed control software in FIGs. 19-23 and repeats steps 312, 313, and 314 of the ramp-to-slow-speed routine in FIG. 20 during subsequent iterations of the speed control software until the ramp-down counter is equal to zero. Once the ramp-down counter is equal to zero, the CPU 30 resets the ramp-down counter to its maximum value (step 315) and subtracts a "ramp-down step" from the variable parameter "new speed" (step 316). The "new speed" is equal to the fixed parameter "full speed" prior to initiating the ramp-to-slow-speed routine in FIG. 20.

After subtracting the "ramp-down step" from the "new speed", the "new speed" is compared to a fixed parameter "slow speed" (step 317). If the "new speed" is greater than the "slow speed", the "transport speed" is set equal to the "new speed" plus the "speed offset value" (step 318) and this "transport speed" is output to the bill transport mechanism 16 (step 307 of FIG. 19). During subsequent iterations of the ramp-to-slow-speed routine, the CPU 30 continues to decrement the "new speed" by the "ramp-down step" until the "new speed" is less than or equal to the "slow speed". Once the "new speed" is less than or equal to the "slow speed" at step 317, the CPU 30 clears the ramp-to-slow-speed bit in the motor flag (step 319), sets the pause-after-ramp bit in the motor flag (step 320), sets the pause-after-ramp counter (step 321), and sets the "new speed" equal to the "slow speed" (step 322). Finally, the "transport speed" is set equal to the "new speed" plus the "speed offset value" (step 318). Since the "new speed" is equal to the "slow speed", outputting the "transport speed" to the bill transport mechanism 16 causes the bill transport mechanism 16 to operate at its slow speed. The ramp-to-slow-speed routine in FIG. 20 smoothly decreases the speed of the bill transport mechanism 16 without causing jerking or motor spikes.

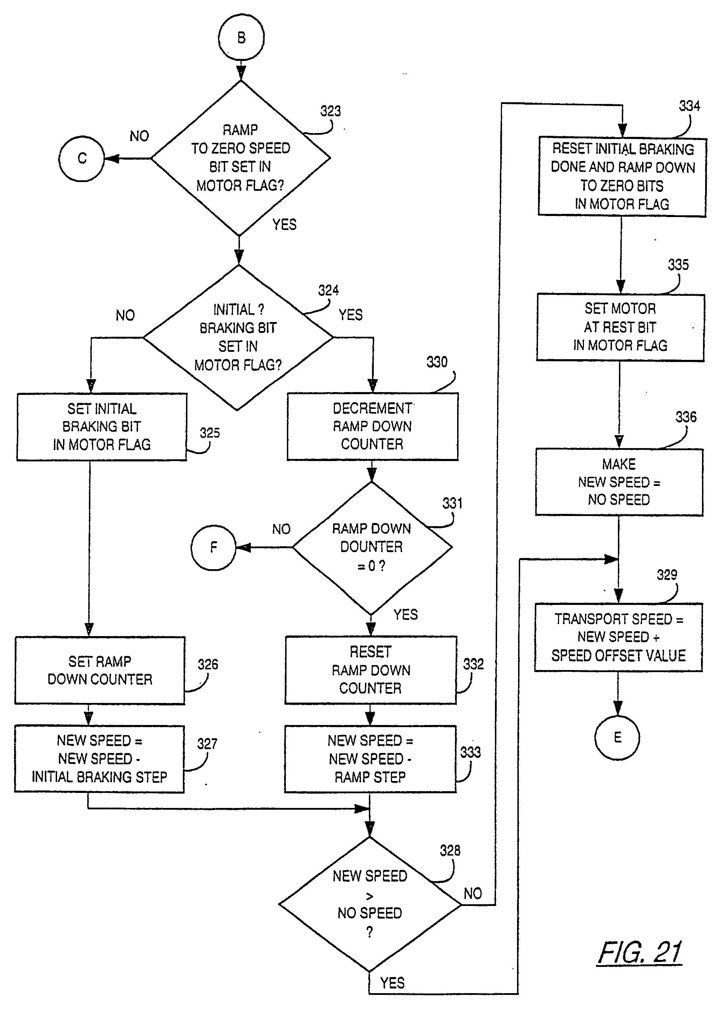

FIG. 21 depicts a ramp-to-zero-speed routine in which the CPU 30 ramps down the transport speed of the bill transport mechanism 16 to zero either from its top speed or its slow speed. In response to completion of counting of a stack of bills, the CPU 30 enters this routine to ramp down the transport speed of the bill transport mechanism 16 from its top speed to zero. Similarly, in response to the optical scanhead 18 detecting a stranger, suspect, or no call bill and the ramp-to-slow-speed routine in FIG. 20 causing the transport speed to be equal to a slow speed, the CPU 30 enters the ramp-to-zero-speed routine to ramp down the transport speed from the slow speed to zero.

With the ramp-to-zero-speed bit set at step 323, the CPU 30 determines whether or not an initial-braking bit is set in the motor flag (step 324). Prior to ramping down the transport speed of the bill transport mechanism 16, the initial-braking bit is clear. Therefore, flow proceeds to the left branch of the ramp-to-zero-speed routine in FIG. 21. In this left branch, the CPU 30 sets the initial-braking bit in the motor flag (step 325), resets the ramp-down counter to its maximum value (step 326), and subtracts an "initial-braking step" from the variable parameter "new speed" (step 327). Next, the CPU 30 determines whether or not the "new speed" is greater than zero (step 328). If the "new speed" is greater than zero at step 328, the variable parameter "transport speed" is set equal to the "new speed" plus the "speed offset value" (step 329) and this "transport speed" is output to the bill transport mechanism 16 at step 307 in FIG. 19.

During the next iteration of the ramp-to-zero-speed routine in FIG. 21, the CPU 30 enters the right branch of the routine at step 324 because the initial-braking bit was set during the previous iteration of the ramp-to-zero-speed routine. With the initial-braking bit set, the CPU 30 decrements the ramp-down counter from its maximum value (step 330) and determines whether or not the ramp-down counter is equal to zero (step 331). If the ramp-down counter is not equal to zero, the CPU 30 immediately exits the speed control software in FIGs. 19-23 and repeats steps 323, 324, 330, and 331 of the ramp-to-slow-speed routine during subsequent iterations of the speed control software until the ramp-down counter is equal to zero. Once the ramp-down counter is equal to zero, the CPU 30 resets the ramp-down counter to its maximum value (step 332) and subtracts a "ramp-down step" from the variable parameter "new speed" (step 333). This "ramp-down step" is smaller than the "initial-braking step" so that the "initial-braking step" causes a larger decremental change in the transport speed of the bill transport mechanism 16 than that caused by the "ramp-down step".

Next, the CPU 30 determines whether or not the "new speed" is greater than zero (step 328). If the "new speed" is greater than zero, the "transport speed" is set equal to the "new speed" plus the "speed offset value" (step 329) and this "transport speed" is outputted to the bill transport mechanism 16 (step 307 in FIG. 19). During subsequent iterations of the speed control software, the CPU 30 continues to decrement the "new speed" by the "ramp-down step" at step 333 until the "new speed" is less than or equal to zero at step 328. Once the "new speed" is less than or equal to the zero at step 328, the CPU 30 clears the ramp-to-zero-speed bit and the initial-braking bit in the motor flag (step 334), sets a motor-at-rest bit in the motor flag (step 335), and sets the "new speed" equal to zero (step 336). Finally, the "transport speed" is set equal to the "new speed" plus the "speed offset value" (step 329). Since the "new speed" is equal to zero, outputting the "transport speed" to the bill transport mechanism 16 at step 307 in FIG. 19 halts the bill transport mechanism 16.

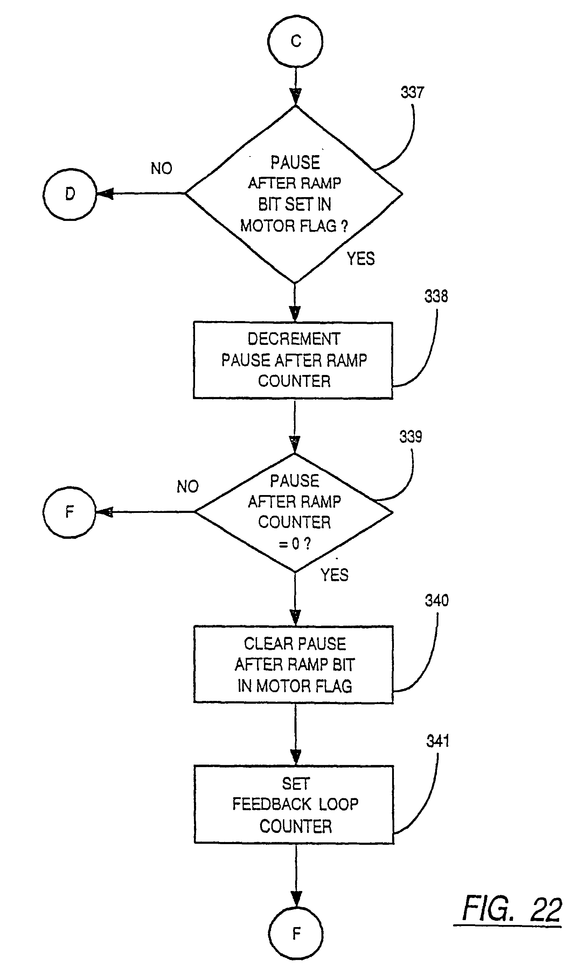

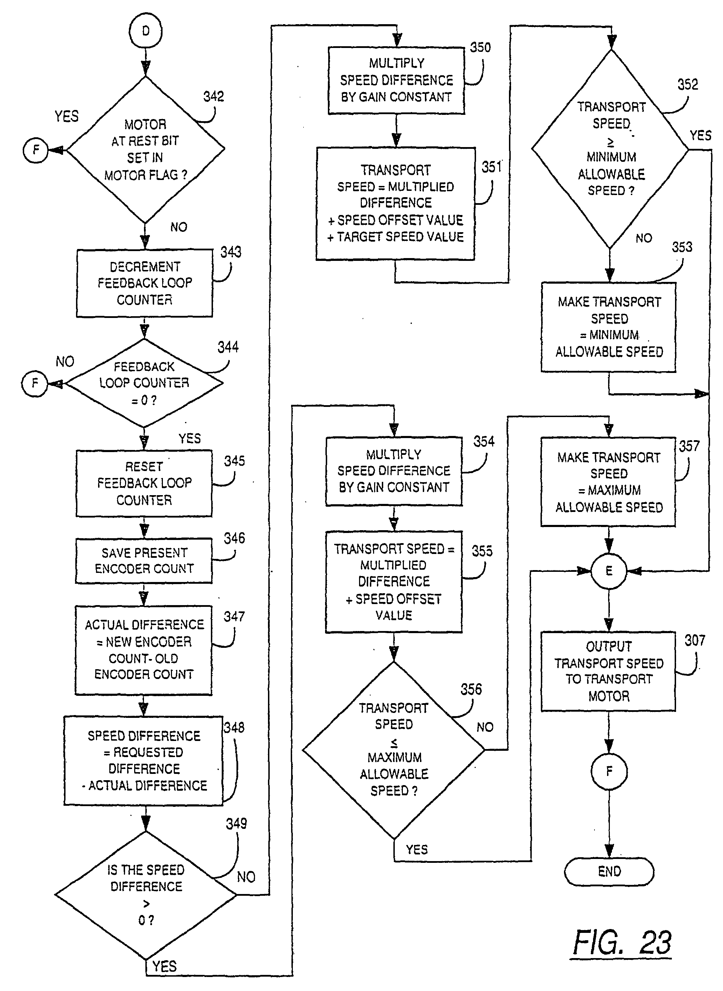

Using the feedback loop routine in FIG. 23, the CPU 30 monitors and stabilizes the transport speed of the bill transport mechanism 16 when the bill transport mechanism 16 is operating at its top speed or at slow speed. To measure the transport speed of the bill transport mechanism 16, the CPU 30 monitors the optical encoder 32. While monitoring the optical encoder 32, it is important to synchronize the feedback loop routine with any transport speed changes of the bill transport mechanism 16. To account for the time lag between execution of the ramp-up or ramp-to-slow-speed routines in FIGs. 19 and 20 and the actual change in the transport speed of the bill transport mechanism 16, the CPU 30 enters a pause-after-ramp routine in FIG. 22 prior to entering the feedback loop routine in FIG. 23 if the bill transport mechanism 16 completed ramping up to its top speed or ramping down to slow speed during the previous iteration of the speed control software in FIGs. 19-23.

The pause-after-ramp routine in FIG. 22 allows the bill transport mechanism 16 to "catch up" to the CPU 30 so that the CPU 30 does not enter the feedback loop routine in FIG. 23 prior to the bill transport mechanism 16 changing speeds. As stated previously, the CPU 30 sets a pause-after-ramp bit during step 309 of the ramp-up routine in FIG. 19 or step 320 of the ramp-to-slow-speed routine in FIG. 20. With the pause-after-ramp bit set, flow proceeds from step 337 of the pause-after-ramp routine to step 338, where the CPU 30 decrements a pause-after-ramp counter from its maximum value. If the pause-after-ramp counter is not equal to zero at step 339, the CPU 30 exits the pause-after-ramp routine in FIG. 22 and repeats steps 337, 338, and 339 of the pause-after-ramp routine during subsequent iterations of the speed control software until the pause-after-ramp counter is equal to zero. Once the pause-after-ramp counter decrements to zero, the CPU 30 clears the pause-after-ramp bit in the motor flag (step 340) and sets the feedback loop counter to its maximum value (step 341). The maximum value of the pause-after-ramp counter is selected to delay the CPU 30 by an amount of time sufficient to permit the bill transport mechanism 16 to adjust to a new transport speed prior to the CPU 30 monitoring the new transport speed with the feedback loop routine in FIG. 23.

Referring now to the feedback loop routine in FIG. 23, if the motor-at-rest bit in the motor flag is not set at step 342, the CPU 30 decrements a feedback loop counter from its maximum value (step 343). If the feedback loop counter is not equal to zero at step 344, the CPU 30 immediately exits the feedback loop routine in FIG. 23 and repeats steps 342, 343, and 344 of the feedback loop routine during subsequent iterations of the speed control software in FIGs. 19-23 until the feedback loop counter is equal to zero. Once the feedback loop counter is decremented to zero, the CPU 30 resets the feedback loop counter to its maximum value (step 345), stores the present count of the optical encoder 32 (step 346), and calculates a variable parameter "actual difference" between the present count and a previous count of the optical encoder 32 (step 347). The "actual difference" between the present and previous encoder counts represents the transport speed of the bill transport mechanism 16. The larger the "actual difference" between the present and previous encoder counts, the greater the transport speed of the bill transport mechanism. The CPU 30 subtracts the "actual difference" from a fixed parameter "requested difference" to obtain a variable parameter "speed difference" (step 348).

If the "speed difference" is greater than zero at step 349, the bill transport speed of the bill transport mechanism 16 is too slow. To counteract slower than ideal bill transport speeds, the CPU 30 multiplies the "speed difference" by a "gain constant" (step 354) and sets the variable parameter "transport speed" equal to the multiplied difference from step 354 plus the "speed offset value" plus a fixed parameter "target speed" (step 355). The "target speed" is a value that, when added to the "speed offset value", produces the ideal transport speed. The calculated "transport speed" is greater than this ideal transport speed by the amount of the multiplied difference. If the calculated "transport speed" is nonetheless less than or equal to a fixed parameter "maximum allowable speed" at step 356, the calculated "transport speed" is output to the bill transport mechanism 16 at step 307 so that the bill transport mechanism 16 operates at the calculated "transport speed". If, however, the calculated "transport speed" is greater than the "maximum allowable speed" at step 356, the parameter "transport speed" is set equal to the "maximum allowable speed" (step 357) and is output to the bill transport mechanism 16 (step 307).

If the "speed difference" is less than or equal to zero at step 349, the bill transport speed of the bill transport mechanism 16 is too fast or is ideal. To counteract faster than ideal bill transport speeds, the CPU 30 multiplies the "speed difference" by a "gain constant" (step 350) and sets the variable parameter "transport speed" equal to the multiplied difference from step 350 plus the "speed offset value" plus a fixed parameter "target speed" (step 351). The calculated "transport speed" is less than this ideal transport speed by the amount of the multiplied difference. If the calculated "transport speed" is nonetheless greater than or equal to a fixed parameter "minimum allowable speed" at step 352, the calculated "transport speed" is output to the bill transport mechanism 16 at step 307 so that the bill transport mechanism 16 operates at the calculated "transport speed". If, however, the calculated "transport speed" is less than the "minimum allowable speed" at step 352, the parameter "transport speed" is set equal to the "minimum allowable speed" (step 353) and is output to the bill transport mechanism 16 (step 307).

It should be apparent that the smaller the value of the "gain constant", the smaller the variations of the bill transport speed between successive iterations of the feedback control routine in FIG. 23 and, accordingly, the less quickly the bill transport speed is adjusted toward the ideal transport speed. Despite these slower adjustments in the bill transport speed, it is generally preferred to use a relatively small "gain constant" to prevent abrupt fluctuations in the bill transport speed and to prevent overshooting the ideal bill transport speed.

## Claims

1. A currency counting an discrimination device for receiving a stack of currency bills, rapidly counting and discriminating the bills in the stack, and then restacking the bills (17) comprising:
an input receptacle (12) for receiving a stack of currency bills (17) to be discriminated;
a denomination discriminating unit (18) for discriminating the denomination of said currency bills (17);
an output receptacle (20) for receiving said currency bills (17) after being discriminated by said discriminating unit; and
a transport mechanism (16) for transporting said currency bills (17), one at a time, from said input receptacle past said discriminating unit and to said output receptacle, whereby
said transport mechanism comprises stripping means (220) for stripping the lowermost bill from a stack of bills (17) in the input receptacle, and first (223) and second (241) driven transport rolls on opposite sides of the discriminating unit (18) for transporting each bill (17) past the discriminating unit (18), said first and second transport rolls (223, 241) each having a circumference, **characterized in that** said first transport roll (223) receives bills (17) directly from said stripping means (220) and transports the received bills (17) to the region between said first and second transport rolls (223, 241).

2. The currency counting and discrimination device of claim 1 wherein said first transport roll (223) has a high-friction surface (228, 229) that is adapted to frictionally engage bills, said high friction surface (228, 229) extending over only a portion of the circumference of said first transport roll (223), and the circumference of said first transport roll (223) is greater than the width of the bills so that successive bills are spaced apart from each other.

3. The currency counting and discrimination device of claim 1 or claim 2 which includes a curved guideway (211) mounted adjacent said first transport roll (223) and defining a curved passageway between said curved guideway (211) and said first transport roll (223), the curved passageway extending about a portion of said first transport roll (223), said curved guideway (211) maintaining bills engaged by said first transport roll (223) in engagement with the surface (228, 229) of said first transport roll (223) around a portion of the circumference thereof as bills are transported through the curved passageway, the device having a top, said guideway (211) being formed as a unitary part of a cover for a rear portion of the top of the device.

4. The currency counting and discrimination device according to any of claims 1-3 further comprising a motor (260) for driving said first and second driven transport rolls (223, 241), said motor (260) being directly coupled to each of said driven transport rolls (223, 241).

5. The currency counting and discrimination device according to any of claims 1-4 wherein:
said transport mechanism transports said currency bills along a transport path; and
said discriminating unit (18) comprises a first scanhead (18a) mounted in a first housing on one side of said transport path; said first housing being movable between an operational position adjacent said transport path and retracted position away from said transport path, said housing being biased so that said first scanhead (18a) is maintained in said operational position.

6. The currency counting and discrimination device of claim 5 wherein said housing has a tapered entry guide (280a) for guiding bills traveling along said transport path to a position adjacent said first scanhead (18a).

7. The currency counting and discrimination device of claim 5 or claim 6 wherein said housing (280) is slidably mounted on at least one post (285, 286), said post (285, 286) being fixed to a frame of the counting and discrimination device; said first housing being moveable along said post (285, 286) between said operational position and said retracted position.

8. The currency counting and discrimination device according to any of claims 5-7 further comprising a second scanhead (18b) mounted in a second housing on a second side of said transport path; said second housing being rigidly attached to said frame.

9. The currency counting and discrimination device according to any of claims 1-8 further comprising:
a frame and wherein
said input receptacle (12) comprises a bill supporting surface (207) for supporting said stack of bills, said bill supporting surface (207) being removable from said frame of the currency counting and discriminating device.

10. The currency counting and discrimination device of claim 9 wherein said bill supporting surface (207) snaps onto said frame.

11. The currency counting and discrimination device of claim 9 wherein said bill supporting surface (207) snaps onto said frame; and
said first housing (280) has a handle (284) for aiding in moving said housing (280) from said operational position to said retracted position; said handle (284) being accessible to an operator of the counting and discriminating device when said bill supporting surface (207) is removed from said frame.

12. The currency counting and discrimination device according to any of claims 1-11 wherein said discriminating unit (18) includes a pair of optical scanheads (18a, 18b) on opposite sides of said transport path, and which includes a first unitary member forming a housing for one of said scanheads and light sources (295, 296), and a second unitary member forming a housing for the other of said scanheads and photodetectors (293, 294).

13. The currency counting and discrimination device of claim 12 wherein one (280) of said housing has a tapered entry guide (280a) for guiding bills traveling along said transport path between said first and second unitary members.

## Patentansprüche

1. Eine Währungszähl- und Unterscheidungsvorrichtung zum Empfangen eines Banknotenstapels, schnellen Zählen und Unterscheiden der Banknoten in dem Stapel und anschließenden Wiederstapeln der Banknoten (17), die umfasst:
einen Eingabebehälter (12) zum Empfangen eines Stapels Banknoten (17), die zu unterscheiden sind;
eine Nennwertunterscheidungseinheit (18) zum Unterscheiden des Nennwerts der Banknoten (17);
einen Ausgabebehälter (20) zum Empfangen der Banknoten, nachdem diese durch die Unterscheidungseinheit unterschieden wurden; und
einen Transportmechanismus (16) zum Transportieren der vereinzelten Banknoten (17) von dem Eingabebehälter an der Unterscheidungseinheit vorbei und zu dem Ausgabebehälter, wobei der Transportmechanismus eine Abstreifeinrichtung (220) zum Abstreifen der untersten Banknote aus dem Stapel von Banknoten (17) in dem Eingabebehälter und eine erste (223) und eine zweite (241) angetriebene Transportwalze an gegenüberliegenden Seiten der Unterscheidungseinheit (18) zum Transportieren jeder Banknote (17) an der Unterscheidungseinheit (18) vorbei umfasst, wobei die erste und zweite Transportwalze (223, 241) jede einen Umfang aufweist, **dadurch gekennzeichnet, dass** die erste Transportwalze (223) Banknoten (17) direkt von der Abstreifeinrichtung (220) empfängt, und die empfangenen Banknoten (17) zu dem Bereich zwischen der ersten und der zweiten Transportwalze (223, 241) transportiert.

2. Die Währungszähl- und Unterscheidungsvorrichtung gemäß Anspruch 1, worin die erste Transportwalze (223) eine Reiboberfläche (228, 229) aufweist, die angepasst ist, um reibungswirksam mit den Banknoten in Eingriff zu kommen, wobei die Reiboberfläche (228, 229) sich nur über einen Bereich des Umfangs der ersten Transportwalze (223) erstreckt, und der Umfang der ersten Transportwalze (223) größer ist als die Breite der Banknoten, so dass nachfolgende Banknoten voneinander beabstandet sind.

3. Die Währungszähl- und Unterscheidungsvorrichtung gemäß Anspruch 1 oder Anspruch 2, welche einen gekrümmten Führungsweg (211) umfasst, der angrenzend der ersten Transportwalze (223) angebracht ist, und einen gekrümmten Durchgang zwischen dem gekrümmten Führungsweg (211) und der ersten Transportwalze (223) definiert, wobei der gekrümmte Durchgang sich um einen Bereich der ersten Transportwalze (223) erstreckt, und der gekrümmte Führungsweg (211) Banknoten, die mit der ersten Transportwalze (223) in Eingriff stehen, in Eingriff mit der Oberfläche (228, 229) der ersten Transportwalze (223) um einen Bereich deren Umfangs hält, wenn die Banknoten durch den gekrümmten Durchgang transportiert werden, wobei die Vorrichtung eine Oberseite aufweist, und der Führungsweg (211) als einteiliger Bestandteil einer Abdeckung für einen hinteren Bereich der Oberseite der Vorrichtung geformt ist.

4. Die Währungszähl- und Unterscheidungsvorrichtung gemäß einem der Ansprüche 1-3 umfasst weiter einen Motor (260) zum Antreiben der ersten und zweiten angetriebenen Transportwalzen (223, 241), wobei der Motor (260) direkt mit jeder der angetriebenen Transportwalzen (223, 241) gekoppelt ist.

5. Die Währungszähl- und Unterscheidungsvorrichtung gemäß einem der Ansprüche 1-4, worin:
der Transportmechanismus die Banknoten entlang eines Transportwegs transportiert; und
die Unterscheidungseinheit (18) einen ersten Abtastkopf (18a) umfasst, der in einem ersten Gehäuse an einer Seite des Transportwegs angebracht ist; wobei das erste Gehäuse bewegbar ist zwischen einer Betriebsposition angrenzend des Transportwegs und einer zurückgezogenen Position weg von dem Transportweg, wobei das Gehäuse derart vorgespannt ist, dass der erste Abtastkopf (18a) in seiner Betriebsposition verbleibt.

6. Die Währungszähl- und Unterscheidungsvorrichtung gemäß Anspruch 5, worin das Gehäuse eine sich verjüngende Eingangsführung (280a) zum Führen von Banknoten, die sich entlang des Transportwegs zu einer Position angrenzend des ersten Abtastkopfs (18a) bewegen, umfasst.

7. Die Währungszähl- und Unterscheidungsvorrichtung gemäß Anspruch 5 oder Anspruch 6, worin das Gehäuse (280) verschiebbar an mindestens einem Pfosten (285, 286) angebracht ist, wobei der Pfosten (285, 286) an einem Rahmen der Zähl- und Unterscheidungsvorrichtung fixiert ist; wobei das erste Gehäuse entlang des Pfostens (285, 286) zwischen der Betriebsposition und der zurückgezogenen Position bewegbar ist.

8. Die Währungszähl- und Unterscheidungsvorrichtung gemäß einem der Ansprüche 5-7, die weiter einen zweiten Abtastkopf (18b) umfasst, der in einem zweiten Gehäuse an einer zweiten Seite des Transportwegs angebracht ist, wobei das zweite Gehäuse fest an dem Rahmen angebracht ist.

9. Die Währungszähl- und Unterscheidungsvorrichtung gemäß einem der Ansprüche 1-8, die weiter umfasst:
einen Rahmen und worin
der Eingabebehälter (12) eine Banknotentragfläche (207) zum Tragen des Banknotenstapels umfasst, wobei die Banknotentragfläche (207) entfernbar ist von dem Rahmen der Währungszähl- und Unterscheidungsvorrichtung.

10. Die Währungszähl- und Unterscheidungsvorrichtung gemäß Anspruch 9, worin die Banknotentragfläche (207) auf den Rahmen schnappt.

11. Die Währungszähl- und Unterscheidungsvorrichtung gemäß Anspruch 9, worin die Banknotentragfläche (207) auf den Rahmen schnappt; und
das erste Gehäuse (280) eine Handhabe (284) als Hilfe beim Bewegen des Gehäuses (280) von der Betriebsstellung zu der zurückgezogenen Stellung umfasst; wobei die Handhabe (284) zugänglich ist für einen Bediener der Zähl- und Unterscheidungsvorrichtung, wenn die Banknotentragfläche (207) von dem Rahmen entfernt ist.

12. Die Währungszähl- und Unterscheidungsvorrichtung gemäß einem der Ansprüche 1-11, worin die Unterscheidungseinheit (18) ein Paar von optischen Abtastköpfen (18a, 18b) an gegenüberliegenden Seiten des Transportwegs umfasst, und welche ein erstes einheitliches Element zum Formen eines Gehäuses für einen der Abtastköpfe und der Lichtquellen (295, 296) umfasst, und ein zweites einheitliches Element zum Formen eines Gehäuses für den anderen der Abtastköpfe und der Fotodetektoren (293, 294) umfasst.

13. Die Währungszähl- und Unterscheidungsvorrichtung gemäß Anspruch 12, worin eines (280) der Gehäuse eine sich verjüngende Eingangsführung (280a) zum Führen von Banknoten, die sich entlang des Transportwegs zwischen dem ersten und zweiten einteiligen Element bewegen, umfasst.

## Revendications

1. Dispositif de comptage et de distinction d'unités monétaires pour recevoir une pile de billets de banque d'unités monétaires, compter et distinguer rapidement les billets de banque de la pile, puis remettre en pile les billets de banque (17), comprenant :
un réceptacle d'entrée (12) pour recevoir une pile de billets de banque d'unités monétaires (17) devant être distingués ;
une unité de distinction de dénominations (18) pour distinguer la dénomination desdits billets de banque d'unités monétaires (17) ;
un réceptacle de sortie (20) pour recevoir lesdits billets de banque d'unités monétaires (17) après qu'ils aient été distingués par ladite unité de distinction ; et
un mécanisme d'acheminement (16) pour acheminer lesdits billets de banque d'unités monétaires (17), un à la fois, depuis ledit réceptacle d'entrée, en passant devant ladite unité de distinction, et jusqu'audit réceptacle de sortie, grâce à quoi
ledit mécanisme d'acheminement comprend des moyens d'enlèvement (220) pour enlever le billet de banque situé au plus bas d'une pile de billets de banque (17) dans le réceptacle d'entrée, et des premier (223) et second (241) rouleaux d'acheminement entraînés sur des côtés opposés de l'unité de distinction (18) pour acheminer chaque billet de banque (17) en passant devant l'unité de distinction (18), lesdits premier et second rouleaux d'acheminement (223, 241) ayant chacun une circonférence, **caractérisé en ce que** ledit premier rouleau d'acheminement (223) reçoit des billets de banque (17) directement desdits moyens d'enlèvement (220) et achemine les billets de banque reçus (17) jusqu'à la zone comprise entre lesdits premier et second rouleaux d'acheminement (223, 241).

2. Dispositif de comptage et de distinction d'unités monétaires selon la revendication 1, dans lequel ledit premier rouleau d'acheminement (223) présente une surface à haut coefficient de frottement (228, 229) qui est conçue pour engager par frottement les billets de banque, ladite surface à haut coefficient de frottement (223, 229) s'étendant sur une partie seulement de la circonférence dudit premier rouleau d'acheminement (223), et la circonférence dudit premier rouleau d'acheminement (223) est supérieure à la largeur des billets de banque, de telle sorte que les billets de banque successifs sont espacés les uns des autres.

3. Dispositif de comptage et de distinction d'unités monétaires selon la revendication 1 ou 2, qui inclut une glissière courbe (211) montée en étant adjacente audit premier rouleau d'acheminement (223) et définissant un passage courbe entre ladite glissière courbe (211) et ledit premier rouleau d'acheminement (223), le passage courbe s'étendant sur environ une partie dudit premier rouleau d'acheminement (223), ladite glissière courbe (211) maintenant les billets de banque engagés par ledit premier rouleau d'acheminement (223) en engagement avec la surface (228, 229) dudit premier rouleau d'acheminement (223) autour d'une partie de sa circonférence alors que les billets de banque sont acheminés au travers du passage courbe, le dispositif comportant une partie supérieure, ladite glissière (211) étant formée en tant que partie unitaire d'un couvercle pour une partie arrière de la partie supérieure du dispositif.

4. Dispositif de comptage et de distinction d'unités monétaires selon l'une quelconque des revendications 1 à 3, comprenant, en outre, un moteur (260) pour entraîner lesdits premier et second rouleaux d'acheminement entraînés (223, 241), ledit moteur (260) étant directement couplé à chacun desdits rouleaux d'acheminement entraînés (223, 241).

5. Dispositif de comptage et de distinction d'unités monétaires selon l'une quelconque des revendications 1 à 4, dans lequel :
ledit mécanisme d'acheminement achemine lesdits billets de banque d'unités monétaires le long d'un trajet d'acheminement ; et
ladite unité de distinction (18) comprend une première tête de balayage (18a) montée dans un premier logement sur un côté dudit trajet d'acheminement ; ledit premier logement étant mobile entre une position opératoire adjacente audit trajet d'acheminement et une position rétractée à l'écart dudit trajet d'acheminement, ledit logement étant sollicité de telle sorte que ladite première tête de balayage (18a) est maintenue dans ladite position opératoire.

6. Dispositif de comptage et de distinction d'unités monétaires selon la revendication 5, dans lequel ledit logement comporte un guide d'entrée effilé (280a) pour guider les billets de banque se déplaçant le long dudit trajet d'acheminement jusqu'à une position adjacente à ladite première tête de balayage (18a).

7. Dispositif de comptage et de distinction d'unités monétaires selon la revendication 5 ou 6, dans lequel ledit logement (280) est monté en glissement sur au moins une colonne (285, 286), ladite colonne (285, 286) étant fixée à un châssis du dispositif de comptage et de distinction ; ledit premier logement étant mobile le long de ladite colonne (285, 286) entre ladite position opératoire et ladite position rétractée.

8. Dispositif de comptage et de distinction d'unités monétaires selon l'une quelconque des revendications 5 à 7, comprenant, en outre, une seconde tête de balayage (18b) montée dans un second logement sur un second côté dudit trajet d'acheminement ; ledit second logement étant fixé rigidement audit châssis.

9. Dispositif de comptage et de distinction d'unités monétaires selon l'une quelconque des revendications 1 à 8, comprenant, en outre :
un châssis, et dans lequel
ledit réceptacle d'entrée (12) comprend une surface de support de billets de banque (207) pour supporter ladite pile de billets de banque, ladite surface de support de billets de banque (207) pouvant être retirée dudit châssis du dispositif de comptage et de distinction d'unités monétaires.

10. Dispositif de comptage et de distinction d'unités monétaires selon la revendication 9, dans lequel ladite surface de support de billets de banque (207) s'encliquette sur ledit châssis.

11. Dispositif de comptage et de distinction d'unités monétaires selon la revendication 9, dans lequel ladite surface de support de billets de banque (207) s'encliquette sur ledit châssis ; et
ledit premier logement (280) comporte une poignée (284) permettant de faciliter le déplacement dudit logement (280) de ladite position opératoire à ladite position rétractée ; ladite poignée (284) étant accessible à un opérateur du dispositif de comptage et de distinction lorsque ladite surface de support de billets de banque (207) est retirée dudit châssis.

12. Dispositif de comptage et de distinction d'unités monétaires selon l'une quelconque des revendications 1 à 11, dans lequel ladite unité de distinction (18) inclut une paire de têtes de balayage optiques (18a, 18b) sur des côtés opposés dudit trajet d'acheminement, et qui inclut un premier élément unitaire formant un logement pour l'une desdites têtes de balayage et des sources de lumière (295, 296), et un second élément unitaire formant un logement pour l'autre desdites têtes de balayage et des photodétecteurs (293, 294).

13. Dispositif de comptage et de distinction d'unités monétaires selon la revendication 12, dans lequel l'un (280) dudit logement comporte un guide d'entrée effilé (280a) pour guider les billets de banque se déplaçant le long dudit trajet d'acheminement entre lesdits premier et second éléments unitaires.
